(19) Europäisches Patentamt
European Patent Office
Office européen des brevets

(11) EP 4 715 688 A1

(12) EUROPEAN PATENT APPLICATION

(43) Date of publication:
**25.03.2026 Bulletin 2026/13**

(21) Application number: **25201373.5**

(22) Date of filing: **10.09.2025**

(51) International Patent Classification (IPC):
***G06N 10/20*** *(2022.01)* ***G06N 10/70*** *(2022.01)*
***G06N 10/40*** *(2022.01)*

(52) Cooperative Patent Classification (CPC):
**G06N 10/70; G06N 10/20;** G06N 10/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.09.2024 US 202418888488**

(71) Applicant: **Microsoft Technology Licensing, LLC**
**Redmond, WA 98052 (US)**

(72) Inventors:
- **HASTINGS, Matthew Benjamin**
  **Redmond, 98052 (US)**
- **WANG, Zhenghan**
  **Redmond, 98052 (US)**
- **AASEN, David Alexander**
  **Redmond, 98052 (US)**
- **HAAH, Jeongwan**
  **Redmond, 98052 (US)**

(74) Representative: **CMS Cameron McKenna Nabarro Olswang LLP**
**Cannon Place**
**78 Cannon Street**
**London EC4N 6AF (GB)**

(54) **LEVERAGING CRYSTALLINE SYMMETRIES FOR LOGICAL GATES**

(57) Aspects of the disclosure include using crystalline symmetries for quantum operations. Aspects include determining that qubit locations of qubits in a quantum computer are identified with locations in a crystal and determining a set of space group symmetries of the crystal. Aspects include using the set of space group symmetries to determine the quantum operations on the qubits, corresponding each space group symmetry of the set of space group symmetries to logical operations, and causing the logical operations to be performed on the qubits of the quantum computer.

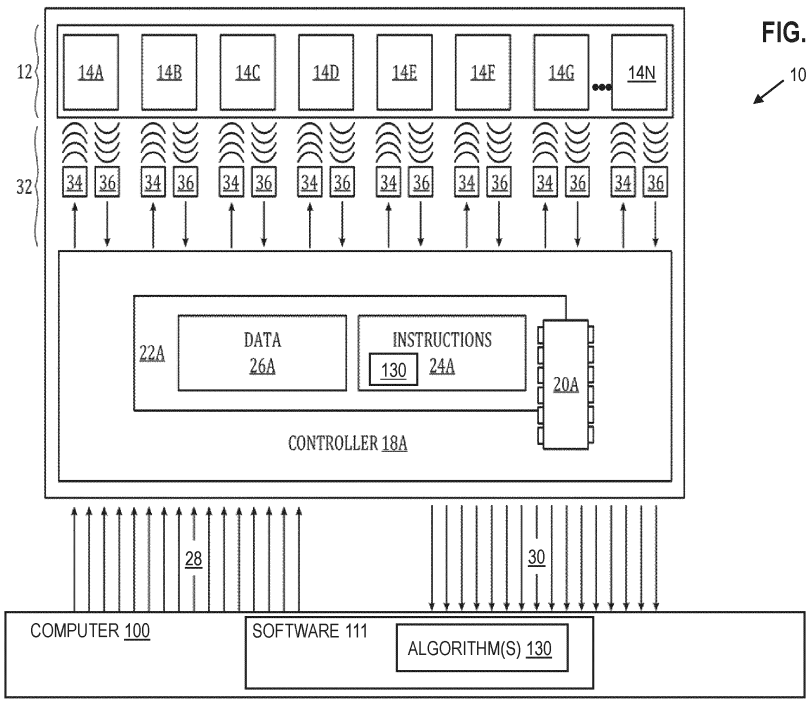

FIG. 1



Processed by Luminess, 75001 PARIS (FR)

## Description

### INTRODUCTION

The subject disclosure relates to quantum circuits, and particularly to a quantum computer for leveraging crystalline symmetries for logical gates.

A quantum computer is a physical machine configured to execute logical operations based on or influenced by quantum-mechanical phenomena. Such logical operations may include, for example, mathematical computation. Current interest in quantum-computer technology is motivated by analysis suggesting that the computational efficiency of an appropriately configured quantum computer may surpass that of any practicable non-quantum computer when applied to certain types of problems. Such problems include computer modeling of natural and synthetic quantum systems, predicting the behavior of new molecules and materials, integer factorization, and machine learning. Furthermore, it has been predicted that continued miniaturization of conventional computer logic structures will ultimately lead to the development of nanoscale logic components that exhibit quantum effects and should therefore be addressed according to quantum-computing principles.

### SUMMARY

Embodiments of the present invention are directed to methods for leveraging crystalline symmetries for logical gates. A non-limiting example method includes determining that qubit locations of qubits in a quantum computer are identified with locations in a crystal, determining a set of space group symmetries of the crystal, and using the set of space group symmetries to determine the quantum operations on the qubits. Also, the method includes corresponding each space group symmetry of the set of space group symmetries to logical operations and causing the logical operations to be performed on the qubits of the quantum computer.

According to one or more embodiments, a method of performing lattice surgery includes inputting two or more four-dimensional (4D) toric codes on a rotated lattice, and cutting the two or more 4D toric codes along hyperplanes so as to have a first hyperplane of one of the two or more 4D toric codes and a second hyperplane of another one of the two or more 4D toric codes. The method includes gluing the first and second hyperplanes together of the one and the another one of the two or more 4D toric codes so as to result in a single 4D toric code corresponding to a 4D torus, and measuring qubits in the single 4D toric code.

Examples include using crystalline symmetries for quantum operations. Examples include determining that qubit locations of qubits in a quantum computer are identified with locations in a crystal and determining a set of space group symmetries of the crystal. Examples include using the set of space group symmetries to determine the quantum operations on the qubits, corresponding each space group symmetry of the set of space group symmetries to logical operations, and causing the logical operations to be performed on the qubits of the quantum computer.

The above features and advantages, and other features and advantages of the disclosure are readily apparent from the following detailed description when taken in connection with the accompanying drawings. This Summary is provided to introduce in simplified form a selection of concepts that are further described in the Detailed Description. This Summary is not intended to identify key features or essential features of the claimed subject matter, nor is it intended to be used to limit the scope of the claimed subject matter. The claimed subject matter is not limited to implementations that solve any or all disadvantages noted in any part of this disclosure.

### BRIEF DESCRIPTION OF THE DRAWINGS

The specifics of the exclusive rights described herein are particularly pointed out and distinctly claimed in the claims at the conclusion of the specification. The foregoing and other features and advantages of the embodiments of the invention are apparent from the following detailed description taken in conjunction with the accompanying drawings in which:

FIG. 1 depicts an example quantum computer configured to execute quantum-logic operations in accordance with one or more embodiments;

FIG. 2 depicts an illustration of a Bloch sphere that provides a graphical description of some quantum mechanical aspects of an individual qubit in accordance with one or more embodiments;

FIG. 3 is a graph of example signal levels and associated durations to assert a quantum-gate operation on one or more qubits of a quantum circuit in accordance with one or more embodiments;

FIG. 4 depicts a block diagram of a classical computer system according to one or more embodiments;

FIG. 5 depicts a flowchart of a method of fold traversals using crystalline symmetries for logical operations in accordance with one or more embodiments;

FIG. 6 depicts a flowchart an algorithm for determining space group symmetries in accordance with one or more embodiments;

FIG. 7 depicts a flowchart of a method for lattice surgery in accordance with one or more embodiments;

FIGS. 8A, 8B, and 8C depict 4D representations of the connectivity of the 1-cells in the Hadamard lattice in accordance with one or more embodiments;

FIG. 9 depicts a flowchart of computer-implemented method for using crystalline symmetries to provide logical gates for qubits in accordance with one or more embodiments; and

FIG. 10 depicts a flowchart of computer-implemented method for a lattice surgery operation on toric codes in accordance with one or more embodiments.

The diagrams depicted herein are illustrative. There can be many variations to the diagram or the operations described therein without departing from the spirit of the invention. For instance, the actions can be performed in a differing order or actions can be added, deleted or modified.

In the accompanying figures and following detailed description of the described embodiments of the invention, the various elements illustrated in the figures are provided with two or three-digit reference numbers. With minor exceptions, the leftmost digit(s) of each reference number corresponds to the figure in which its element is first illustrated.

DETAILED DESCRIPTION

In accordance with one or more embodiments, a system, a method, a classical computer coupled to a quantum computer, and/or a quantum computer are configured and arranged to leverage crystalline symmetries for logical gates.

One or more embodiments disclose how to generate logical operations using crystalline symmetries. The present disclosure describes a set of code automorphisms that are found by combining fold-transversal Clifford gates for quantum codes and the use of crystalline symmetries. Spatial symmetries are utilized to computing the permutation symmetry, fold-H symmetry, and fold-S symmetry instead of brute force. Additionally, one or more embodiments describe a new type of lattice surgery, thus enabling more logical operations.

Definitions:

A quantum error correcting code is defined by an isometric linear map from a Hilbert space of k qubits, called logical qubits, to a larger Hilbert space of n qubits, called the physical qubits of the code, for some integers k and n with n>k. A stabilizer quantum error correcting code is an error correcting code where the image of this map is the joint eigenspace of n-k independent, mutually commuting operators, termed stabilizers, each of which is a product of Pauli operators on one or more physical qubits.

A Calderbank, Shor, and Steane (CSS) stabilizer quantum error correcting code is a stabilizer quantum error correcting code where each stabilizer is a product of either Pauli X operators on some qubits, or Pauli Z operators, but not both.

Quantum gates represent the operations that can be performed on qubits. A universal gate set is a set of these quantum gates that enable universal quantum computation, which means that all possible operations are enabled. The gates included in this set include both Clifford gates and non-Clifford gates.

Lattice surgery is a technique used in quantum computing, particularly with surface codes, to perform operations on qubits in a fault-tolerant manner. Lattice surgery is technique that involves "cutting" and "stitching" patches of qubits (lattices) to perform logical operations. Instead of moving qubits around, lattice surgery manipulates the boundaries between different regions of qubits to achieve the desired computational effect. By splitting and merging these patches, lattice surgery can implement various quantum gates, such as the controlled NOT (CNOT) gate, which is fundamental for quantum computation. Lattice surgery maintains the 2D structure and reduces the number of qubits needed compared to other techniques.

Surface codes are a type of quantum error-correcting code that arranges qubits on a two-dimensional (2D) grid. Surface codes are known for their high fault-tolerance and ability to correct errors that occur during quantum computations.

Crystalline symmetry in relation to quantum computing relates to the symmetrical properties of the quantum error correction code (or quantum circuit), the crystal structure is revealed by mapping each qubit location in the quantum error correction code (circuit) to a spacetime location in a D+1 dimensional crystal.

A code block refers to a set of qubits that are used together to encode quantum information in a way that protects the quantum information from errors. In a quantum error correcting code, a block of physical qubits is used to encode a smaller number of logical qubits. In the Shor code, 9 physical qubits are utilized to encode 1 logical qubit.

A code patch is defined as a section of the 2D grid that encodes a logical qubit. Each code patch includes multiple physical qubits that work together to protect the quantum information from errors. The group of physical qubits is encoded into a logical qubit such that the logical qubits are represented by these patches. The edges of the patches correspond to logical Pauli operators, which are used to perform quantum operations

A standard cubic lattice for quantum computing denotes qubits that are arranged in a three-dimensional (3D) grid or a four-dimensional (4D) grid where each qubit is equidistant from its neighbors. The 3D or 4D cubic lattice is useful for organizing qubits and implementing quantum error correction.

A rotated cubic lattice in quantum computing refers to a specific arrangement of qubits in a 3D grid or 4D grid that has been rotated to optimize certain properties or operations. Rotating the 3D or 4D cubic lattice can help in optimizing the connectivity and interactions between qubits and reducing the number of qubits needed to operate the code. This can be particularly useful for certain quantum algorithms and error correction schemes. Rotated cubic lattices can be used to improve the efficiency of quantum gates and operations. For example, by rotating the lattice, one can reduce the distance between interacting qubits, which can lead to faster and more reliable quantum operations. In the context of quantum error correction, rotated lattices can help in implementing more efficient error-correcting codes. The rotation can align the qubits in a way that simplifies the detection and correction of errors.

A space group symmetry refers to the symmetrical properties of a crystal within the Hilbert space of a quantum system. These symmetries can be leveraged to enhance quantum error correction and simplify quantum operations.

A qubit permutation is where qubit states are transferred to another qubit with the use of SWAP gates. To consider an example with 3 qubits, a permutation could be created where qubit 0 is mapped to qubit 1, qubit 1 is mapped to qubit 2, and qubit 2 is mapped to qubit 0. The SWAP gate can either be done as a gate or by physically swapping the qubit locations.

Fold transversals in quantum computing refer to a method used to implement logical operations in quantum error-correcting codes, particularly in CSS (Calderbank-Shor-Steane) codes. This method leverages certain symmetries or dualities within the codes to perform operations fault-tolerantly. Folding concept: Originally applied to surface codes, folding involves using symmetries to implement logical operations. This can be visualized as reflecting or folding the code along certain axes. Transversal gates: These are operations applied simultaneously to corresponding qubits in different code blocks. They are crucial for fault-tolerant quantum computing because they prevent errors from spreading uncontrollably. Fold-Transversal gates: By combining the folding concept with transversal gates, one can implement logical operations using only these gates and qubit permutations. This approach is particularly useful for low-density parity-check (LDPC) quantum codes.

A fold-H gate is given by finding a qubit permutation which maps every X stabilizer to a Z stabilizer, and vice versa. Once such a permutation is found, the logical gate is given by applying the permutation composed with a transversal Hadamard.

A fold-H gate is given by finding a qubit permutation which maps every X stabilizer to a Z stabilizer and vice versa. Once such a permutation is found, we use it to perform a logical operation as follows. Any qubit which is fixed under the permutation gets a transversal S gate, qubits which are related by the permutation get a CZ gate.

The automorphism group of a code is the set of permutations of the codeword symbols that map the whole code onto itself. In the context of quantum codes, an automorphism refers to a transformation that maps a quantum code to itself while preserving its structure and properties. Essentially, it is a symmetry operation that leaves the code invariant. For quantum stabilizer codes, which are a common type of quantum error-correcting code, automorphisms can be understood through the lens of the Pauli group and the Clifford group. These groups consist of operations that can be applied to quantum states without altering the overall error-correcting capabilities of the code. There are different types of automorphisms in quantum codes: Strong Automorphisms: These are unitary operations that leave the code space invariant and act trivially on the logical state of the code. Weak Automorphisms: These are more relaxed transformations that may not preserve all the properties of the code but still map codewords to codewords. Clifford-Twisted Automorphisms: These involve elements of the Clifford group and can be related to certain mathematical structures.

Translational invariance in quantum mechanics is the requirement that the expectation value of the Hamiltonian is unchanged under the transformation. In quantum mechanics, translation invariance refers to a system's properties remaining unchanged under spatial translations. This means that if one shifts the entire system by a certain distance, the physical laws governing the system and its behavior do not change.

In the context of quantum error-correcting codes, 1-cells, 2-cells, and 3-cells refer to elements used in the construction of topological quantum codes, such as the surface code. These topological codes are designed to protect quantum information from errors due to decoherence and other quantum noise. 1-cells: These are the edges of the lattice

in a topological quantum code. Each 1-cell represents a physical qubit that can be in a superposition of states. In the surface code, these qubits are placed on the edges of a 2D lattice. 2-cells: These are the faces of the lattice, which can be thought of as plaquettes. In the surface code, each 2-cell is associated with a stabilizer operator that checks for errors. There are typically two types of stabilizers: one for checking bit-flip errors (X-stabilizers) and one for phase-flip errors (Z-stabilizers). 3-cells: In some topological codes, such as the 3D color code, 3-cells represent volumes or cells in a 3D lattice. These codes extend the concepts of 1-cells and 2-cells to three dimensions, providing additional robustness against errors.

These elements work together to detect and correct errors in a quantum system, ensuring the integrity of the quantum information being processed.

Quantum compiling fills the gap between the computing layer of high-level quantum algorithms and the layer of physical qubits with their specific properties and constraints. Quantum compiling is a hybrid between the general-purpose compilers of computers, transforming high-level language to assembly language and hardware synthesis by hardware description language, where functions are automatically synthesized into customized hardware. Quantum computation takes place at its lowest level by means of physical operations described by unitary matrices acting on the state of qubits. The computation is achieved as circuits of quantum gates, which are ordered sequences of unitary operators, acting on a few qubits at once.

The toric code is a topological quantum error correcting code, and an example of a stabilizer code, defined on a two-dimensional spin lattice. The toric code is the simplest and most well studied of the quantum double models. Topology is the branch of mathematics that studies the properties of objects that do not change under smooth deformations, one classic example being the number of holes in a torus.

There is a family of Abelian topological Calderbank-Shor-Steane (CSS) stabilizer codes whose generators are few body X-type and Z-type Pauli strings associated to the stars and plaquettes, respectively, of a cellulation of a two-dimensional surface (with a qubit located at each edge of the cellulation). Toric code often either refers to the construction on the two-dimensional torus and/or is an alternative name for the general construction. The construction on surfaces with boundaries is often called the planar code. Codewords correspond to ground states of the surface code Hamiltonian, and error operators create or annihilate pairs of anyonic charges or vortices.

Quantum computing can utilize methods that suppress errors in faulty qubits. Quantum error correction is a broad class of techniques that encode "logical" qubits and gates in a subspace of the Hilbert space formed by many more "physical" qubits and gates. The structure of a quantum code has an influence on how logical gates are enacted on the physical qubits, and hence the total size and execution time of a quantum computation.

Now turning to an example quantum computer architecture, FIG. 1 illustrates an example quantum computer 10 configured to execute quantum-logic operations. While conventional computer memory holds digital data in an array of bits and enacts bit-wise logic operations, a quantum computer holds data in an array of qubits and operates quantum-mechanically on the qubits in order to implement the desired logic. Accordingly, quantum computer 10 of FIG. 1 includes at least one quantum circuit 12 having an array of physical qubits 14A, 14B, and 14C-14N, where N is the last number of qubits. The qubits 14A-14N can be referred to collectively as qubits 14. The quantum circuit 12 of the array of qubits 14 can be arranged in a lattice structure as depicted in FIG. 4.

The qubits 14 of the quantum circuit 12 take various forms, depending on the desired architecture of the quantum computer 10. According to one or more embodiments, this disclosure relates to neutral atom systems. Further, a qubit alternatively can include: a superconducting Josephson junction, a trapped ion, a trapped atom coupled to a high-finesse cavity, an atom or molecule confined within a fullerene, an ion or neutral dopant atom confined within a host lattice, a quantum dot exhibiting discrete spatial- or spin-electronic states, electron holes in semiconductor junctions entrained via an electrostatic trap, a coupled quantum-wire pair, an atomic nucleus addressable by magnetic resonance, a free electron in helium, a molecular magnet, or a metal-like carbon nanosphere, as non-limiting examples. Additionally, a qubit can include an optically trapped neutral atom such as Cs, Sr, Rb, Yb. More generally, each qubit 14 can include any particle or system of particles that can exist in two or more discrete quantum states that can be measured and manipulated experimentally. For instance, a qubit may be implemented in the plural processing states corresponding to different modes of light propagation through linear optical elements (e.g., mirrors, beam splitters and phase shifters), as well as in states accumulated within a Bose-Einstein condensate.

FIG. 2 is an illustration of a Bloch sphere 16 that provides a graphical description of some quantum mechanical aspects of an individual qubit 14. In this description, the north and south poles of the Bloch sphere correspond to the standard basis vectors $|0\rangle$ and $|1\rangle$, respectively. The set of points on the surface of the Bloch sphere comprise all possible pure states $|\psi\rangle$ of the qubit, while the interior points correspond to all possible mixed states. A mixed state of a given qubit may result from decoherence, which may occur because of undesirable coupling to external degrees of freedom.

Referring to FIG. 1, quantum computer 10 includes a controller 18A. The controller 18A includes at least one processor 20A and associated computer memory 22A. The processor 20A of the controller 18A can be coupled operatively to peripheral componentry, such as network componentry, to enable the quantum computer to be operated remotely. The processor 20A of the controller 18A can take the form of a central processing unit (CPU), a graphics processing unit (GPU),

or the like. As such, the controller can include classical electronic componentry. The terms 'classical' and 'non-quantum' are applied herein to any component that can be modeled accurately as an ensemble of particles without considering the quantum state of any individual particle. Classical electronic components include integrated, microlithographed transistors, resistors, and capacitors, for example. The computer memory 22A can be configured to hold program instructions 24A that cause the processor 20A to execute any function or process of the controller. The computer memory can also be configured to hold additional data 26A. In examples in which quantum circuit 12 is a low-temperature or cryogenic device, the controller 18A can include control componentry operable at low or cryogenic temperatures, for example, a field-programmable gate array (FPGA) operated at 77 kelvin (K). In such examples, the low-temperature control componentry can be coupled operatively to interface componentry operable at normal temperatures.

The controller 18A of the quantum computer 10 is configured to receive a plurality of inputs 28 and to provide a plurality of outputs 30. The inputs and outputs can each include digital and/or analog lines. At least some of the inputs and outputs can be data lines through which data is provided to and/or extracted from the quantum computer. Other inputs can include control lines via which the operation of the quantum computer can be adjusted or otherwise controlled. In one or more embodiments, the quantum computer 10 can be coupled a classical computer 100. Further, details of the example classical computer 100 are discussed in FIG. 27.

The controller 18A is operatively coupled to the quantum circuit 12 via quantum interface 32. The quantum interface 32 is configured to exchange data bidirectionally with the controller 18A. The quantum interface 32 is further configured to exchange signal corresponding to the data bidirectionally with the qubit register. Depending on the architecture of quantum computer 10, such signal may include electrical, magnetic, and/or optical signal. By the signal conveyed through the quantum interface 32, the controller 18A can interrogate and otherwise influence the quantum state held in various qubits 14. For example, the controller 18A can interrogate and otherwise influence the quantum state held a qubit register, as defined by a collective quantum state of a group of qubits 14. The quantum interface 32 includes at least one modulator 34 and at least one demodulator 36, each coupled operatively to one or more qubits 14 of the quantum circuit 12. In one or more embodiments, a modulator 34 and a demodulator 36 can each be coupled to qubits in a qubit register. Each modulator 34 is configured to output a signal to one or more qubits 14 in the quantum circuit 12 based on modulation data received from the controller 18A. In one or more embodiments, at least one modulator 34 can output a signal to qubits in a qubit register based on modulation data received from the controller 18A. Each demodulator 36 is configured to sense a signal from the one or more qubits 14 of the quantum circuit 12 and to output data to the controller 18A based on the signal. In one or more embodiments, each demodulator 36 is configured to sense a signal from the qubit register and to output data to the controller 18A based on the signal. The data received from the demodulator 36 can, in some examples, be an estimate of an observable to the measurement of the quantum state held in one or more qubits 14 in the quantum circuit 12. In one or more embodiments, the data received from the demodulator 36 can be an estimate of an observable to the measurement of the quantum state held in the qubit register.

In some examples, the modulator 34 can transmit a suitably configured signal to interact physically with one or more qubits 14 of the quantum circuit 12 in order to trigger measurement of the quantum state held in one or more qubits14. The demodulator 36 can then sense a resulting signal released by the one or more qubits 14 pursuant to the measurement and can provide the data corresponding to the resulting signal to the controller 18A. Stated another way, the demodulator 26 is configured to output, based on the signal received, an estimate of one or more observables reflecting the quantum state of one or more qubits of the qubit register, and to furnish the estimate to the controller 18A. In one non-limiting example, the modulator 34 can provide, based on data from the controller 18A, an appropriate voltage pulse or pulse train to an electrode of one or more qubits 14, to initiate a measurement. In short order, the demodulator 36 can sense photon emission from the one or more qubits 14 and can assert a corresponding digital voltage level on a quantum-interface line into the controller 18A. Generally speaking, any measurement of a quantum-mechanical state is defined by the operator "O" corresponding to the observable to be measured; the result "R" of the measurement is guaranteed to be one of the allowed eigenvalues of "O". In the quantum computer 10, "R" is statistically related to the qubit-register state prior to the measurement but is not uniquely determined by the qubit-register state.

Pursuant to appropriate input from the controller 18A, the quantum interface 32 may be configured to implement one or more quantum-logic gates to operate on the quantum state held in the quantum circuit 12, for example, in a qubit register in the quantum circuit 12. Whereas the function of each type of logic gate of a classical computer system is described according to a corresponding truth table, the function of each type of quantum gate is described by a corresponding operator matrix. The operator matrix operates on (i.e., multiplies) the complex vector representing the qubit register state and effects a specified rotation of that vector in Hilbert space.

For example, the Hadamard gate HAD is defined by

$$\mathrm{HAD}=\frac{1}{\sqrt{2}}\begin{bmatrix}1 & 1\\ 1 & -1\end{bmatrix}. \qquad \text{(A)}$$

The HAD gate acts on a single qubit; it maps the basis state $|0 >$ to $(|0 >)/\sqrt{2}$ , and maps to |1 > to $(|0 > -|1 >)\sqrt{2}$ . Accordingly, the HAD gate creates a superposition of states that, when measured, have equal probability of revealing |0 > or |1 >.

The phase gate *S* is defined by

$$S = \begin{bmatrix} 1 & 0 \\ 0 & e^{i\pi/2} \end{bmatrix}. \qquad \text{(B)}$$

The S gate leaves the basis state |0 > unchanged but maps |1 > to $e^{i\pi/2}$|1>. Accordingly, the probability of measuring either |0 > or |1 > is unchanged by this gate, but the phase of the quantum state of the qubit is shifted. This is equivalent to rotating $\psi$ by 90 degrees along a circle of latitude on the Bloch sphere of FIG. 2.

Some quantum gates operate on two or more qubits. The SWAP gate, for example, acts on two distinct qubits and swaps their values. This gate is defined by

$$SWAP = \begin{bmatrix} 1000 \\ 0010 \\ 0100 \\ 0001 \end{bmatrix}. \qquad \text{(C)}$$

Additionally, the SWAP gate can also be implemented by physically swapping the location of a pair of qubits. The foregoing list of quantum gates and associated operator matrices is non-exhaustive, but is provided for ease of illustration. Other quantum gates include Pauli-X, -Y, and -Z gates, the $\sqrt{NOT}$ gate, additional phase-shift gates, the $\sqrt{SWAP}$ gate, controlled cX, cY, and cZ gates, and the Toffoli, Fredkin, Ising, and Deutsch gates, as non-limiting examples.

Continuing in FIG. 1, suitably configured signals from modulators 34 of the quantum interface 32 can interact physically with one or more qubits 14 of the quantum circuit 12, for example, a qubit register in the quantum circuit 12, so as to assert any desired quantum-gate operation. As noted above, the desired quantum-gate operations are specifically defined rotations of a complex vector representing the qubit register state. In order to effect a desired rotation "O", one or more modulators of quantum interface 32 can apply a predetermined signal level $S_i$ for a predetermined duration $T_i$. In some examples, plural signal levels can be applied for plural sequenced or otherwise associated durations, as depicted in FIG. 3, to assert a quantum-gate operation on one or more qubits of the quantum circuit 12, for example, in a qubit register of the quantum circuit 12. In general, each signal level $S_i$ and each duration $T_i$ is a control parameter adjustable by appropriate programming of controller 18A.

The term 'oracle' is used herein to describe a predetermined sequence of elementary quantum-gate and/or measurement operations executable by quantum computer 10. An oracle can be used to transform the quantum state of qubits 14 in the quantum circuit 12, for example, qubits in a qubit register, to effect a classical or non-elementary quantum-gate operation or to apply a density operator, for example. In some examples, an oracle may be used to enact a predefined 'black-box' operation *f*(*x*), which may be incorporated in a complex sequence of operations. To ensure adjoint operation, an oracle mapping n input qubits |*x* > to m output or ancilla qubits |*y* > *f*(*x*) may be defined as a quantum gate *O*(|*x* > ⊗|y>) operating on the n+m qubits. In this case, *O* can be configured to pass the n input qubits unchanged but combine the result of the operation f(x) with the ancillary qubits via an XOR operation, such that *O*(|*x* > ⊗t>)=*x* > ⊗|y+f(x)>. As described further below, a state-preparation oracle is an oracle configured to generate a quantum state of specified qubit length.

In one or more embodiments, implicit in the description herein is that each qubit 14 of qubit registers can be interrogated via quantum interface 32 so as to reveal with confidence the standard basis vector |0> or |1> that characterizes the quantum state of that qubit. In some implementations, however, measurement of the quantum state of a physical qubit could be subject to error. Accordingly, any physical qubit 14 can be implemented as a logical qubit, which includes a grouping of physical qubits measured according to an error-correcting oracle that reveals the quantum state of the logical qubit with confidence.

As discussed herein, the quantum computer 10 can be implemented using any quantum computing technology. For example, a trapped-ion quantum computer is one example approach for a large-scale quantum computer. Ions, or charged atomic particles, can be confined and suspended in free space using electromagnetic fields. Qubits are stored in stable electronic states of each ion, and quantum information can be transferred through the collective quantized motion of the ions in a shared trap (interacting through the Coulomb force). Lasers are applied to induce coupling between the qubit states (for single qubit operations) or coupling between the internal qubit states and the external motional states (for entanglement between qubits). The fundamental operations of a quantum computer have been demonstrated with the currently highest accuracy in trapped-ion systems.

Another example quantum computer is a neutral atom quantum computer which is a modality of quantum

computers built out of Rydberg atoms; this modality has many commonalities with trapped-ion quantum computers. The concept has been used to demonstrate a 48 logical qubit processor. To perform computation, the atoms are first trapped in a magneto-optical trap. Qubits are then encoded in the energy levels of the atoms. Initialization and operation of the computer is performed via the application of lasers on the qubits. For example, the laser can accomplish arbitrary single qubit gates and a CZ gate for universal quantum computation. The CZ gate is carried out by leveraging the Rydberg blockade which leads to strong interactions when the qubits are physically close to each other. To perform a CZ gate, a Rydberg pulse $\pi$ is applied to the control qubit, a $2\pi$ on the target qubit, and then a $\pi$ on the control. Measurement is enforced at the end of the computation with a camera that generates an image of the outcome by measuring the fluorescence of the atoms.

Further example quantum computers include linear optical quantum computing or linear optics quantum computation (LOQC), also referred to as photonic quantum computing (PQC). LOQC is a paradigm of quantum computation that allows (under certain conditions) universal quantum computation. LOQC uses photons as information carriers, mainly using linear optical elements or optical instruments (including reciprocal mirrors and waveplates) to process quantum information, and uses photon detectors and quantum memories to detect and store quantum information.

Another example is a topological quantum computer, in which the quantum state held in each qubit is a state of two or more braidable quasi particles, or "anyons", observed within a non-Abelian topological phase of matter. The world lines of different anyons are quantum mechanically forbidden from intersecting or merging. This feature forces their paths to form stable braids that pass around each other in space-time. Relative to trapped particles used in other types of quantum computers, anyon braids are more resistant to quantum decoherence, which is a source of error in quantum computation. However, the realization of a topological quantum computer has the ability to engineer a suitable topological phase and to manipulate the anyons therein.

As noted herein, the instructions 24A cause measurements on the quantum circuit 12 using the modulators 34 and demodulators 36. A measurement of one or more physical qubits 14 is the result of sending a signal via the modulator 34 and receiving a signal back via the demodulator 36. The received signal, also referred to as the measurements, has the quantum information about the logical qubit that is formed of two or more physical qubits 14. Based on a signal sent and the received signal from the quantum circuit 12, a logical qubit is formed of two or more physical qubits 14 as understood by one of ordinary skill in the art. The various signals sent and corresponding signals received back can be performed using any desired encoding scheme or code, as understood by one of ordinary skill in the art.

Any code can be implemented in the instructions 24A in the quantum computer 10. In one or more embodiments, any quantum error correction code such as the Calderbank-Shor-Steane (CSS) code, the Hastings-Haah code, toric code, etc., can be applied on the quantum computer 100 in accordance with computer-executable instructions in the classical computer 100 having been sent to the quantum computer 10 for execution. As understood by one of ordinary skill in the art, the quantum code denotes a technique of operating an array of qubits 14 in the quantum circuit 12. Moreover, the quantum code is a sequence of qubit measurements on the quantum circuit 12 of the quantum computer 10, and the classical computer 100 eventually stores those measurement outcomes. That sequence of qubit measurements is programmed into the classical computer 100, which then sends signals to the quantum computer 10, indicating which operations to perform on the quantum circuit 12.

According to one or more embodiments, FIG. 5 is a flowchart of a method 500 of fold traversals using crystalline symmetries for logical operations according to one or more embodiments. In one or more embodiments, the quantum operations can be for beryllium (ion) logical operations.

At block 502, the software 111 of the classical computer 100 is configured to input a quantum error correction code on the quantum computer 10. The quantum error correction code can be included in the instructions 24A in the quantum computer 10 and applied to the qubits 14. In one or more embodiments, the quantum error correction code may utilize a predetermined number of qubits 14 (i.e., physical qubits) to generate/encode a single logical qubit.

At block 504, the software 111 of the classical computer 100 is configured to determine/observe that qubit locations of the qubits 14 can be identified with locations in a crystal. The crystal has edges that connect at vertices to form faces. The qubit locations of the qubits 14 may correspond to the vertices of the crystal. The crystal has a crystalline symmetry, and the qubit locations of the qubits 14 relate to the symmetrical properties of the crystal lattice structures. Examples of locations in a crystal are as follows: take a 2D toric code, with qubits on vertices, edges and plaquettes; and place the qubit at the midpoint of every vertex, edge, and plaquette. The qubit locations now define a crystal, which has 3 points per unit cell. The same approach works for toric code in any dimension. An example is given in Section IV discussed herein.

At block 506, the software 111 of the classical computer 100 is configured to compute a set of space group symmetries of the crystal. FIG. 6 illustrates a flowchart of an algorithm for determining a set of space group symmetries, as discussed further below. Also, an example is provided in Section III.1.

At block 508, the software 111 of the classical computer 100 is configured to use the space group symmetries to compute the physical actions on the qubits 14, where examples of physical actions include permutation, fold-H gates, and

fold-S gates. The goal is to use each space group symmetry to deduce a permutation, fold-H, or fold-S logical operation. So the input is a list of space group symmetries, and the output is a corresponding list of physical operations applied to the qubits. Examples are provided in Sections IIIA, IIIB, and IIIC discussed herein.

At block 510, the software 111 of the classical computer 100 is configured to identify each space group symmetry with a logical action that can be utilized during compilation of the quantum computer 10. For a given space group symmetry there are three choices of actions to take place on the physical qubits (1) permutation, (2) fold-H, and (3) fold-S. The method 500 computes classically for which space group symmetries that get which actions on the physical qubits (they have to be a symmetry of the code). Then in block 510, the method 500 is computing what the corresponding action is on the logical qubits.

In one or more embodiments, quantum gates (as physical actions) are applied to the qubits 14 of the quantum computer 10 as permutations, fold-H gates, and/or fold-S gates at the set of space group symmetries of the crystal. That is, each space group symmetry is translated to an action on the physical qubits, which is then translated to a logical operation on the encoded logical qubits.

Now turning to FIG. 6, a flowchart is provided of a method 600 of an algorithm for determining space group symmetries according to one or more embodiments. The software 111 can include, call, and/or be integrated with one or more algorithms 130 and/or any other known software to function as discussed herein. The method 600 for performing set of space group transformations can be performed by, for example, executing one of the algorithms 130 of the software 111.

At block 602, the software 111 is configured to compute and/or cause the computation of a set of lattice automorphisms using a standard numerical algebra tool such as SageMath. SageMath is a mathematics software system licensed under the GPL.

At block 604, the software 111 is configured to identify a unit cell and the set of coordinates $\boldsymbol{r}_j$ with $j = 1,\cdots q$. The software 111 can pick a coordinate, say $\boldsymbol{r}_1$, and a lattice automorphism M in the group of lattice automorphisms.

At block 606, the present disclosure knows that $\boldsymbol{r}_1$ must be mapped to some $\boldsymbol{r}_1 + \Delta$ under a space group transformation $(M, b)$, where $\Delta$ is an integral vector; and to determine this set, the software 111 is configured to pick a pair of points $\boldsymbol{r}_j$ and $\boldsymbol{r}_k$ and solve for b, and then check whether it satisfies all the constraints of a space group symmetry. Since this is a finite problem, it is efficient to solve on a computer (assuming we have an efficient way to compute the lattice automorphisms). The resulting $q^2$ linear equations are straightforward to solve for a given $M$ as shown in Eq. 13.

At block 608, the software 111 is configured to check each candidate pair $(M, b_{jk})$ explicitly if it is a space group symmetry. This solution fixes a particular $\Delta$, but any other choice of $\Delta$ is related by an integral vector, and results in an equivalent space group transformation with a shifted origin.

FIG. 7 is a flowchart of a method 700 for lattice surgery according to one or more embodiments.

At block 702, the software 111 is configured to input two or more 4D (2,2) toric codes on a rotated lattice.

At block 704, the software 111 is configured to perform lattice surgery (operations) to glue a pair of tori together into a larger torus and slice the single larger torus into a pair tori.

At block 706, the software 111 is configured to perform logical operations corresponding to, for example, XX and ZZ measurements between triples of qubits, and the logical operations can be performed during the compilation phase of the quantum computer 10. It is a generalized lattice surgery operation, given by cutting open 4-torri and gluing them back together, as described further herein.

Further discussion of the corresponding logical operations is provided in Section V herein.

Headings and subheadings are presented in the descriptions for ease of understanding and to assist the reader. The use of headings and subheading is not meant to be limiting, and it should be appreciated that the descriptions presented under headings can be integrated with the descriptions presented under other headings.

## I. INTRODUCTION

The classical computer 100 includes software 111 having computer-executable instructions that, when executed by one or more processors 101, cause the processors 101 to perform in accordance with one or more embodiments as discussed herein. The software 111 can include, be integrated with, and/or call various pieces of software to operate as discussed herein. The software 111 is configured to operate with or call one or more application programing interfaces (APIs) to utilize various software tools, software programs, and algorithms as understood by one of ordinary skill in the art. The software 111 of the classical computer 100 causes the quantum circuit 12 to perform quantum operations on the qubits 14 in order to change the state of the qubits 14 and/or receive measurements or measurement outcomes from the qubits 14. The classical computer 100 and/or the controller 18A receives the measurements or measurement outcomes, checks for errors, performs error correction, and/or causes further quantum operations to be performed on the qubits 14 of the quantum circuit 12 according to the states of the qubits 14 including any errors that are corrected and/or errors that could not be corrected. The quantum circuit 12 is controlled by the classical computer 100 and/or the controller 18A to perform the following procedure.

The present disclosure describes how to generate logical operations using crystalline symmetries such that the

logical operations are executed on the quantum computer 10. The present disclosure describes a set of code automorphisms which are found by integrating the results of a publication (by N. P. Breuckmann and S. Burton, "Fold-Transversal Clifford Gates For Quantum Codes," (2022), arXiv:2202.06647 [quant-ph], which is herein incorporated by reference) and the use of crystalline symmetries, in accordance with one or more embodiments. One or more embodiments further discusses a new type of lattice surgery, enabling more logical operations for execution on the quantum computer 10.

II. FOUNDATION

In following, it is helpful to use the symplectic representation of the Pauli and Clifford group. The isomorphism between the Pauli group $P_n$ on $n$ qubits modulo phases denoted $\hat{P}_n = P_n/\langle 1, i, -i, -1\rangle$ and the symplectic vector space $(\mathbb{F}_2^{2n}, J)$ are given by

$$\text{(phase)}X(\boldsymbol{a})Z(\boldsymbol{b}) \mapsto (\boldsymbol{a}|\boldsymbol{b}),$$

(Eq. 1)

where $X(\boldsymbol{a}) = \otimes_{j=1}^{n} X_j^{a_j}$ and $Z(\boldsymbol{b}) = \otimes_{j=1}^{n} Z_j^{b_j}$. Multiplication in the group $\hat{P}_n$ becomes addition in the symplectic vector space. The commutation relations of the Pauli matrices are encoded in the symplectic form

$$J_n = \begin{pmatrix} \mathbf{0} & \text{id}_n \\ \text{id}_n & \mathbf{0} \end{pmatrix}.$$

(Eq. 2)

If $P$ and $P'$ are two Pauli operators, $v$ and $v'$ the corresponding $\mathbb{F}_2$ valued vectors, and $PP' = (-1)^{\text{comm}(P,P')}P'P$, then $\text{comm}(P, P') = vJv'^T$. In what follows, the present disclosure will leave n implicit. Note that the present disclosure is representing the elements of the Pauli group by a $2n$ dimensional row vector.

A stabilizer code $C$ is specified by an Abelian subgroup of the Pauli group which does not include -id. In the symplectic representation, the code is specified by a m by $2n$ parity check matrix $C = (C_x|C_z)$ satisfying $CJC^T = \mathbf{0}$. A CSS code is any code which can be written as,

$$C = \begin{pmatrix} C_X & 0 \\ 0 & C_Z \end{pmatrix}.$$

(Eq. 3)

A logical operator $\boldsymbol{v} \in \mathbb{F}_2^{2n}$ is any operator satisfying $CJv^T = \mathbf{0}$. The number of logical qubits is given by $k = n - \text{rank}C$. It is convenient to package a generating set of logical operators into a $k$ by $2n$ matrix $L$ satisfying $LJL^T = J$ and $CJL^T = 0$. Such a basis always exists. It is convenient to think of the matrix $L$ as a map from the Pauli group on $k$ qubits to the code space of $C$.

A symmetry of the code is given by a unitary matrix $U$ which takes the code space back to itself. Here, the subset of symmetries given by unitary Clifford matrices are considered. A Clifford unitary is any unitary matrix that maps products of Pauli operators to products of Pauli operators. It is again convenient to work in the binary symplectic representation, where the present disclosure considers Clifford unitaries modulo the group $\hat{P}_n$. This is still referred to as the Clifford group, with the implicit understanding that the present disclosure is working modulo the Pauli group mod phases. Correspondingly, a Clifford unitary is represented by a $2n$ by $2n$ symplectic matrix. That is a $2n$ by $2n$ matrix $U$ is Clifford if $UJU^T = J$, i.e., the group of Clifford matrices modulo $\hat{P}_n$ is the symplectic group

$$\text{Sp}(2n, \mathbb{F}_2) = \{U \in \mathbb{F}_2^{2n\times 2n}: UJU^T = J\}$$

(Eq. 4)

A Clifford symmetry of the code is any Clifford unitary $U$ such that

$$\mathrm{Aut}(C) = \{U \in \mathrm{Sp}(2n, \mathbb{F}_2) : \mathrm{RowSpan}(CU) = \mathrm{RowSpan}(C)\}. \quad \text{(Eq. 5)}$$

A. Permutation, fold-H, and fold-S symmetry

In this subsection, discussed are three types of symmetries: permutation, fold-H, and fold-S symmetries.

An $n$ by $n$ permutation matrix $P$ acts on the qubits via the matrix,

$$U(P) = \begin{pmatrix} P & 0 \\ 0 & P \end{pmatrix} \quad \text{(Eq. 6)}$$

The qubit permutation $P$ is a symmetry of the code if the row span of $H$ and $HU$ are identical.

For a CSS code built from parity check matrices $C_X$ and $C_Z$, a ZX duality is any permutation $D$ of the qubits which maps RowSpan($C_X$) surjectively into RowSpan($C_Z$) and vice versa. That is RowSpan($C_XD$) = RowSpan($C_Z$) and RowSpan($C_ZD$) = RowSpan($C_X$).

Given a ZX duality $D$, one can define the fold-$H$ symmetry given by,

$$F_H(D) = \begin{pmatrix} 0 & D \\ D & 0 \end{pmatrix} \quad \text{(Eq. 7)}$$

To check that (the fold-H) $F_H$ is a symmetry, the present disclosure notes that $CF_H(D) = \begin{pmatrix} 0 & C_XD \\ C_ZD & 0 \end{pmatrix}$ which shares the same row span as $C$ since RowSpan($C_ZD$) = RowSpan($C_X$) and vice versa.

In other words, the present disclosure (e.g., software 111) finds a qubit permutation which maps the support of each X-stabilizer to the support of a Z-stabilizer, applies the permutation to the qubits, and then applies a global transversal Hadamard gate.

Similarly, given a ZX duality $D$ such that $D^2$ = id, one can define the fold-S symmetry as,

$$F_S(D) = \begin{pmatrix} \mathrm{id} & D \\ 0 & \mathrm{id} \end{pmatrix}. \quad \text{(Eq. 8)}$$

In other words, the present disclosure (e.g., software 111) finds a qubit permutation which interchanges the support of each $X$-stabilizer to the support of a $Z$-stabilizer, and then applies a $CZ$ to any qubits which are identified under this map, and an $S$ to all qubits which are left invariant. It is noted that the constraint $D^2$ = id can be relaxed as long as RowSpan($C_XD$) $\subseteq$ RowSpan($C_Z$).

B. Symmetry action on the logical subspace

Given a logical subspace $L$ of a code $C$, the present disclosure (e.g., software 111) can compute the logical action directly by applying one of the above unitaries and computing how the transformed logicals commute with the initial logical operators. Under the unitary $U$, it is noted that $L \to LU$, and since $U$ is a symmetry, one has RowSpan($LU$) = RowSpan($L$); therefore, there exists an $M$ such that $LU = ML$. Using that $LJL^T = J$, we have $LUJL^T = MJ$ and so,

$$M = LUJL^TJ$$

(Eq. 9)

where $M$ is the action of $U$ on the logical operators. It is noted that $M \in \mathrm{Sp}(2k, \mathbb{F}_2)$ is a $2k$ by $2k$ matrix which acts from the right on row vectors of the logical Pauli group.

III. LOGICAL OPERATIONS FROM CRYSTALLINE SYMMETRIES

Computing the permutation, fold-H, and fold-S symmetries is difficult to do by brute force when the code size becomes too large. For this reason, the present disclosure (e.g., software 111) resorts to spatial symmetries. Of course, not all codes admit spatial symmetries, but when they do this gives a powerful method for computing logical operations. In particular, any code coming with lots of structure is well suited to this technique, such as a topological codes, hyperbolic codes, hypergraph product codes, cyclic codes, and so on. For simplicity, in the following, the present disclosure directs attention to translation invariant codes on the $d$ dimensional torus, but the discussion can be straightforwardly extended to $d$ dimensional cubes, hyperbolic manifolds, or any code which can be brought to a form that admits an action of the (appropriately generalized) space group.

To frame the problem, the present disclosure considers a translation invariant code $C$ in $d$ dimensions with periodic boundary conditions. Specified are the periodic boundary conditions by a $d$-dimensional integral matrix $W$ of rank $d$. The $d$ dimensional torus is given by the quotient $\mathbb{Z}^d/W$. That is, two points in the $d$-torus are equivalent if they are related by an integer combination row vectors of $W$. Note that if $U$ is a unimodular matrix (integer matrix with determinent equal to + 1 or -1), then $UW$ is an equivalent lattice, and correspondingly describes an equivalent periodicity constraint, and an equivalent code.

Since the code is translation invariant, the present disclosure has some number of qubits in each unit cell. It is convenient to assign each qubit in a unit cell a coordinate $\boldsymbol{r}_j$ for $j = 1, \cdots, q$. There are no constraints on the $\boldsymbol{r}_j$ other than those imposed by translation invariance (e.g., $\boldsymbol{r}_j$ may be equal to $\boldsymbol{r}_k$ even when $k \neq j$). Similarly, the present disclosure assigns each stabilizer a coordinate as well which respects the unit cell. This coordinate assignment is natural for many topological codes, as in many cases they can be placed on a translation invariant cellulation which naturally provides coordinate positions. Concrete examples are provided in the following subsections. Having situated each qubit at a physical coordinate along with translation invariance, the present disclosure has a "crystal of qubits". As will be seen, the present disclosure (via software 111) can search for symmetry operations by exploiting the crystalline geometry.

Recall in $d$ dimensions the space group is the set of rigid transformations which leave a translation invariant set of points invariant, it is a subgroup of the n-dimensional Euclidean group $E(n)$. A space group transformation is labeled by an orthogonal rotation $M \in O(d, \mathbb{R})$ along with a shift $b \in \mathbb{R}^d$. The space group action on a vector is given by:

$$(M, \boldsymbol{b}): \boldsymbol{r} \mapsto \boldsymbol{r}M + \boldsymbol{b},$$

(Eq. 10)

where the present disclosure has taken the vector $\boldsymbol{r}$ to be a row vector. This is related to the fact that the integral matrix $W$ has row vectors as lattice vectors. The group law is given by,

$$(M', \boldsymbol{b}') \circ (M, \boldsymbol{b}) = (MM', \boldsymbol{b}M' + \boldsymbol{b}').$$

(Eq. 11)

The subgroup of the space group formed by elements of the form $(M, \boldsymbol{0})$ is called the point group. The space group itself consists of all transformations of the form $(M, \boldsymbol{b})$ which preserve the set of of crystalline coordinates.

The present disclosure now considers how to act on a stabilizer group with a crystalline symmetry. First, the space group symmetry must be compatible with the periodicity constraints imposed by $W$. This imposes the constraint that the lattice generated by $W$ is preserved by the orthogonal matrix appearing in the space group transformation. That is, the present disclosure requires

$$\mathrm{hnf}(WM) = \mathrm{hnf}(W), \tag{Eq. 12}$$

where hnf(⋯) takes the Hermite normal form (HNF) of the matrix it acts on. An equivalent condition is requiring the existence of a unimodular matrix $U$ such that $WM = UW$. The present disclosure considers the set of space group elements ($M$, $b$) which satisfy hnf($WM$) = hnf($W$). Such an $M$ is called a lattice automorphism.

In low dimensions, the space groups have been classified. In general dimensions the space group is not classified, and hence the present disclosure provides an algorithm (e.g., algorithm 130 of the software 111) for determining elements of the space group below.

1. Algorithm for finding space group symmetries

To determine a set of space group transformations, the present disclosure can use the following algorithm 130 of the software 111. Standard numerical algebra tools such as SageMath (or other mathematical tools) can compute the lattice automorphisms. The present disclosure considers a unit cell, and the set of coordinates $\boldsymbol{r}_j$ with $j = 1, \cdots, q$. The algorithm 130 can pick a coordinate, say $\boldsymbol{r}_1$, and a lattice automorphism $M$. The present disclosure knows that $\boldsymbol{r}_1$ must be mapped to some $\boldsymbol{r}_j + \Delta$ under a space group transformation ($M$, $\boldsymbol{b}$), where $\Delta$ is an integral vector. To determine this set, the algorithm 130 can pick a pair of points $\boldsymbol{r}_j$ and $\boldsymbol{r}_k$ and solve for $b$, and then check whether the resulting transformation satisfies all the constraints of a space group symmetry. Since this is a finite problem, it is efficient to solve on the classical computer 100 (assuming that the software 111 has (or calls software tools that have) an efficient way to compute the lattice automorphisms). The resulting $q^2$ linear equations are straightforwaard to solve for a given $M$:

$$(M, \boldsymbol{b}_{jk})(\boldsymbol{r}_j) = \boldsymbol{r}_k \quad ==> \quad \boldsymbol{b}_{jk} = \boldsymbol{r}_j - \boldsymbol{r}_k M. \tag{Eq. 13}$$

Each candidate pair ($M$, $b_{jk}$) can then be checked explicitly if the candidate pair is a space group symmetry. Of course, this solution fixes a particular $\Delta$, but any other choice of $\Delta$ is related by an integral vector, and results in an equivalent space group transformation with a shifted origin.

A. Crystalline permutation symmetry

A crystalline permutation symmetry is given by the space group action on the qubits which preserves the stabilizer group. A generalized crystalline permutation symmetry is given by ($M$, $\boldsymbol{b}$, $U$) where $U$ is a finite depth local Clifford circuit, and ($M$, $\boldsymbol{b}$) is a space group transformation. Explicitly, it is given by,

$$(M, \boldsymbol{b}, U) : P_{\boldsymbol{r}_j} \mapsto U P_{\boldsymbol{r}_j M + \boldsymbol{b}} U^\dagger, \tag{Eq. 14}$$

where $P \in \{\mathrm{id}, X, Y, Z\}$. Accordingly, setting $U$ = id, $M$ = id, and $\boldsymbol{b}$ to any coordinate direction will be a symmetry due to translation invariance. When $U$ is trivial, this is purely a permutation symmetry.

B. Crystalline fold-H symmetry

Given a CSS code, the present disclosure (e.g., via software 111) can define a fold-H symmetry using the crystalline space group. Recall that a fold-H symmetry uses a ZX duality as input. A ZX duality can be found by looking for the set of space group symmetries ($M$, $\boldsymbol{b}$) that maps X-stabilizers to Z-stabilizers, maps Z-stabilizers to X-stabilizers, and maps qubits to qubits. Once one finds the set of space group transformations satisfying these constraints, one can construct the fold-H symmetry as shown in Eq. 7.

C. Crystalline fold-S symmetry

Given a CSS code, the present disclosure (e.g., via software 111) can define a fold-S symmetry using the crystalline space group. The software 111 searches for the set of space group elements ($M$, $\boldsymbol{b}$) that maps X-stabilizers to Z-stabilizers, and maps qubit locations to the same set of qubit locations. The present disclosure also requires that the map is order 2, i.e., $M^2$ = id and $M\boldsymbol{b} + \boldsymbol{b} = \boldsymbol{0}$. Once one finds this subset of ZX dualities, one can construct the fold-S symmetry following Eq. 8.

IV. EXAMPLES

The present disclosure considers the 4D (2,2) toric on a rotated cubic lattice defined by W. The rotated cubic lattice has 0, 1-, 2-, 3-, and 4-cells. These cells can be assembled into the following 5-term chain complex,

$$C_4 \underset{\partial_4^T}{\overset{\partial_4}{\rightleftarrows}} C_3 \underset{\partial_3^T}{\overset{\partial_3}{\rightleftarrows}} C_2 \underset{\partial_2^T}{\overset{\partial_2}{\rightleftarrows}} C_1 \underset{\partial_1^T}{\overset{\partial_1}{\rightleftarrows}} C_0$$

(Eq. 15)

In Eq. 15, $\partial$ is the boundary operator and satisfies $\partial^2 = 0$, and $\partial^T$ is the coboundary operator composed with the isomorphism between $C_j$ and $C^j$, where $\partial^T$ is a matrix that is the transpose of $\partial$. Any consecutive triple of elements, such as C3, C2, C1, in the chain complex defines a CSS code. It is convenient to label each j-cell, by a point $p$, along with $j$ integers in the range $\{0, 1, 2, \cdots, d-1\}$. These integers represent the cells of interest, for example ($p$, {0,3}) denotes the two-cell which contains the point $p$, and the edges $p + \hat{0}$ and $p + \hat{1}$, where $\hat{\imath}$ is $i$th positively oriented unit vector in $\mathbb{R}^4$. In the example 5-term chain complex of Eq. 15, the example 5 terms are $C_0$, $C_1$, $C_2$, $C_3$, and $C_4$, the j-cells run from 0-cells up to 4-cells, with 0-cells in C0, 1-cells in C1,..., 4-cells in C4.

The (2,2) toric code uses $C_3$, $C_2$, and $C_1$, placing qubits on the 2-cells, X-stabilizers on the 1-cells, and Z-stabilizers on the 3-cells. For a 1-cell $\boldsymbol{c}_1 \in C_1$, the X-stabilizer is given by $X(\partial_2^T \boldsymbol{c}_1)$, and the disclosure has used $X(\boldsymbol{v}) = \bigotimes_j X_j^{v_j}$. Similarly, for a 3-cell $\boldsymbol{c}_3 \in C_3$, the Z-stabilizer is given by $Z(\partial c_3)$. The resulting code is a CSS code, and the parity check matrix is simply,

$$C = \begin{pmatrix} C_{\partial_2^T} & 0 \\ 0 & C_{\partial_3} \end{pmatrix}.$$

(Eq. 16)

For Eq. 16, $C_{\partial^*}$: $C_1 \to C_2$ and $C_\partial$: $C_3 \to C_2$ are the matrices representing the boundary and dual boundary operators respectively.

Now let's define the crystal. The present disclosure labels each stabilizer and qubit by the midpoint of its corresponding cell. That is:

$$(p, \{i, j, k\}) \mapsto p + \frac{\hat{\imath} + \hat{\jmath} + \hat{k}}{2}$$

(Eq. 17)

$$(p, \{i, j\}) \mapsto p + \frac{\hat{\imath} + \hat{\jmath}}{2}$$

(Eq. 18)

$$(p, \{i\}) \mapsto p + \frac{\hat{\imath}}{2}$$

(Eq. 19)

For Eqs. 17, 18, and 19, $p \in \mathbb{Z}^4/W$.

There are many interesting explicit examples to consider, and a particularly interesting one is given by,

$$W = \begin{pmatrix} 1 & 1 & 1 & 1 \\ 1 & -1 & 1 & -1 \\ 1 & 1 & -1 & -1 \\ 1 & -1 & -1 & 1 \end{pmatrix} \sim \begin{pmatrix} 1 & 1 & 1 & 1 \\ 0 & 2 & 0 & 2 \\ 0 & 0 & 2 & 2 \\ 0 & 0 & -2 & 2 \end{pmatrix} \sim \begin{pmatrix} 1 & 1 & 1 & 1 \\ 0 & 2 & 0 & 2 \\ 0 & 0 & 2 & 2 \\ 0 & 0 & 0 & 4 \end{pmatrix}.$$

(Eq. 20)

On the right, it can be seen that W has been put into its Hermite normal form. The corresponding 4D (2,2) toric code is a block code [[96,6,8]] with 64 X-stabilizers and 64 Z-stabilizers.

The 4D (2.2) code with HNF in Eq 20 is nice because it is particularly symmetric. The lattice W has 384 lattice automorphisms. Each lattice automoorphism yields a permutation symmetry, of which only 24 of them are distinct. In FIGS. 8A, 8B, and 8C, there is shown the connectivity of the 1-cells of the lattice using the central matrix in Eq. 20.

FIGS. 8A, 8B, and 8C are diagrams of the connectivity of the 1-cells in the Hadamard lattice. FIGS. 8A, 8B, and 8C are limited 4D representations with only a few representations of 3rd dimension and 4th dimension edges shown in addition to the 1st dimension and 2nd dimension edges. A convenient basis is shown in the middle of Eq. 20. The bottom **2** by **2** matrix is represented by the diamond shape, and the corresponding connectivity-it is the lattice used for a rotated 2D toric code. Note that the upper left boundary is connected to the lower right, and the lower left boundary is connected to the upper right boundary. There are 8 vertices associated with it. The connectivity in the 3rd and 4th dimension is twisted. The **2** on the diagonal in the second row the integral matrix means we have "two layers", hence why we have drawn two overlaid diamonds. The two layers have a direct connection as drawn by the black lines connecting the layers and also a twisted boundary condition shown with a blue. The last **2** in the second row means when translating from the back diamond to the front a shift of **2** along the vertical direction takes place. The corresponding edge is drawn in blue, all others are found by translates of this. The first row **(1, 1, 1, 1)** means that there is an edge in the fourth direction but shifting in the **(1, 1, 1)** direction once reconnecting. Being mindful of the twisted boundary conditions, two representative edges for the 4th dimension are drawn in red. The Hadamard lattice is especially symmetric, the 4D analogue of the rotated 2D toric code. In particular any straight line following the 1-cells has $\ell_1$ distance 4. On the right, non-trivial representatives of 1-cells have been drawn. Any horizontal or vertical line in the gray diamond will also have $\ell_1$ distance 4.

The fold-H transformations are more interesting. The 4D cubic lattice admits a Poincare duality. This duality maps $*: C_j \to C_{d-j}$. In general, and using the notation for an $l$-cell the Poincare duality is given by,

$$\begin{array}{ccc} (p, \{i_1, \cdots, i_l\}) & \xrightarrow{\star} & (p + \hat{i}_1 + \cdots + \hat{i}_l, \{i_1, \cdots, i_l\}^*) \\ \Big\downarrow \text{pt} & & \Big\downarrow \text{pt} \\ p + \frac{\hat{i}_1 + \cdots + \hat{i}_l}{2} & \xrightarrow[\star]{} & p + \hat{i}_1 + \cdots + \hat{i}_l + \frac{1}{2}\sum_{\hat{j} \notin \{\hat{i}_1, \cdots, \hat{i}_l\}} \hat{j} \end{array}$$

In the above, the pt (point) function takes the midpoint of the $l$-cell, and "*" means to take every coordinate direction not in the tuple. Up to qubit permutations, the action shown in the equation immediately above is the only fold-H found. On the logical qubits, the action of fold-H is given by

$$\begin{pmatrix} 0&0&0&0&0&0&0&0&0&0&0&1\\ 0&0&0&0&0&0&0&0&0&0&1&0\\ 0&0&0&0&0&0&0&0&0&1&0&0\\ 0&0&0&0&0&0&0&0&1&0&0&0\\ 0&0&0&0&0&0&0&1&0&0&0&0\\ 0&0&0&0&0&0&1&0&0&0&0&0\\ 0&0&0&0&0&1&0&0&0&0&0&0\\ 0&0&0&0&1&0&0&0&0&0&0&0\\ 0&0&0&1&0&0&0&0&0&0&0&0\\ 0&0&1&0&0&0&0&0&0&0&0&0\\ 0&1&0&0&0&0&0&0&0&0&0&0\\ 1&0&0&0&0&0&0&0&0&0&0&0 \end{pmatrix}$$

(Eq. 21)

The fold-S matrices, all make use of non-trivial space group transformations with both *M* and *b* non-trivial. Many of the resulting matrices result in equivalent logical actions. Recording only the 8 independent logical actions (which can be called fold-S-1, fold-S-2, fold-S-3, fold-S-4, fold-S-5, fold-S-6, fold-S-7, and fold-S-8) gives,

$$\begin{pmatrix} 1&0&0&0&0&0&0&0&0&0&0&1\\ 0&1&0&0&0&0&0&0&0&0&1&0\\ 0&0&1&0&0&0&0&0&0&1&0&0\\ 0&0&0&1&0&0&0&0&1&0&0&0\\ 0&0&0&0&1&0&0&1&0&0&0&0\\ 0&0&0&0&0&1&1&0&0&0&0&0\\ 0&0&0&0&0&0&1&0&0&0&0&0\\ 0&0&0&0&0&0&0&1&0&0&0&0\\ 0&0&0&0&0&0&0&0&1&0&0&0\\ 0&0&0&0&0&0&0&0&0&1&0&0\\ 0&0&0&0&0&0&0&0&0&0&1&0\\ 0&0&0&0&0&0&0&0&0&0&0&1 \end{pmatrix}, \begin{pmatrix} 1&0&0&0&0&0&1&1&0&1&1&1\\ 0&1&0&0&0&0&1&1&0&1&0&0\\ 0&0&1&0&0&0&0&0&1&0&0&1\\ 0&0&0&1&0&0&1&1&0&0&1&1\\ 0&0&0&0&1&0&1&0&0&1&1&0\\ 0&0&0&0&0&1&1&0&1&1&0&1\\ 0&0&0&0&0&0&1&0&0&0&0&0\\ 0&0&0&0&0&0&0&1&0&0&0&0\\ 0&0&0&0&0&0&0&0&1&0&0&0\\ 0&0&0&0&0&0&0&0&0&1&0&0\\ 0&0&0&0&0&0&0&0&0&0&1&0\\ 0&0&0&0&0&0&0&0&0&0&0&1 \end{pmatrix},$$

$$\begin{pmatrix} 1&0&0&0&0&0&0&0&0&0&0&1\\ 0&1&0&0&0&0&0&0&0&0&1&0\\ 0&0&1&0&0&0&0&0&0&1&1&1\\ 0&0&0&1&0&0&0&0&1&0&1&1\\ 0&0&0&0&1&0&0&1&1&1&1&0\\ 0&0&0&0&0&1&1&0&1&1&0&1\\ 0&0&0&0&0&0&1&0&0&0&0&0\\ 0&0&0&0&0&0&0&1&0&0&0&0\\ 0&0&0&0&0&0&0&0&1&0&0&0\\ 0&0&0&0&0&0&0&0&0&1&0&0\\ 0&0&0&0&0&0&0&0&0&0&1&0\\ 0&0&0&0&0&0&0&0&0&0&0&1 \end{pmatrix} \begin{pmatrix} 1&0&0&0&0&0&0&0&0&0&0&1\\ 0&1&0&0&0&0&0&0&0&0&1&0\\ 0&0&1&0&0&0&0&0&0&1&1&1\\ 0&0&0&1&0&0&0&0&1&0&0&0\\ 0&0&0&0&1&0&0&1&1&0&0&1\\ 0&0&0&0&0&1&1&0&1&0&1&0\\ 0&0&0&0&0&0&1&0&0&0&0&0\\ 0&0&0&0&0&0&0&1&0&0&0&0\\ 0&0&0&0&0&0&0&0&1&0&0&0\\ 0&0&0&0&0&0&0&0&0&1&0&0\\ 0&0&0&0&0&0&0&0&0&0&1&0\\ 0&0&0&0&0&0&0&0&0&0&0&1 \end{pmatrix},$$

$$\begin{pmatrix} 1&0&0&0&0&0&0&1&1&1&1&1\\ 0&1&0&0&0&0&1&0&0&1&0&0\\ 0&0&1&0&0&0&1&0&0&0&1&0\\ 0&0&0&1&0&0&1&1&0&0&0&0\\ 0&0&0&0&1&0&1&0&1&0&0&0\\ 0&0&0&0&0&1&1&0&0&0&0&0\\ 0&0&0&0&0&0&1&0&0&0&0&0\\ 0&0&0&0&0&0&0&1&0&0&0&0\\ 0&0&0&0&0&0&0&0&1&0&0&0\\ 0&0&0&0&0&0&0&0&0&1&0&0\\ 0&0&0&0&0&0&0&0&0&0&1&0\\ 0&0&0&0&0&0&0&0&0&0&0&1 \end{pmatrix}, \begin{pmatrix} 1&0&0&0&0&0&0&1&0&1&0&1\\ 0&1&0&0&0&0&1&0&1&1&0&1\\ 0&0&1&0&0&0&0&1&0&0&0&0\\ 0&0&0&1&0&0&1&1&0&0&1&1\\ 0&0&0&0&1&0&0&0&0&1&0&0\\ 0&0&0&0&0&1&1&1&0&1&0&0\\ 0&0&0&0&0&0&1&0&0&0&0&0\\ 0&0&0&0&0&0&0&1&0&0&0&0\\ 0&0&0&0&0&0&0&0&1&0&0&0\\ 0&0&0&0&0&0&0&0&0&1&0&0\\ 0&0&0&0&0&0&0&0&0&0&1&0\\ 0&0&0&0&0&0&0&0&0&0&0&1 \end{pmatrix},$$

$$\begin{pmatrix} 1&0&0&0&0&0&0&1&1&0&0&0\\ 0&1&0&0&0&0&1&0&0&0&0&0\\ 0&0&1&0&0&0&1&0&0&1&1&0\\ 0&0&0&1&0&0&0&0&1&0&0&0\\ 0&0&0&0&1&0&0&0&1&0&0&1\\ 0&0&0&0&0&1&0&0&0&0&1&0\\ 0&0&0&0&0&0&1&0&0&0&0&0\\ 0&0&0&0&0&0&0&1&0&0&0&0\\ 0&0&0&0&0&0&0&0&1&0&0&0\\ 0&0&0&0&0&0&0&0&0&1&0&0\\ 0&0&0&0&0&0&0&0&0&0&1&0\\ 0&0&0&0&0&0&0&0&0&0&0&1 \end{pmatrix}, \begin{pmatrix} 1&0&0&0&0&0&0&0&0&0&0&1\\ 0&1&0&0&0&0&0&0&0&0&1&0\\ 0&0&1&0&0&0&0&0&0&1&0&0\\ 0&0&0&1&0&0&0&0&1&0&1&1\\ 0&0&0&0&1&0&0&1&0&1&0&0\\ 0&0&0&0&0&1&1&0&0&1&0&0\\ 0&0&0&0&0&0&1&0&0&0&0&0\\ 0&0&0&0&0&0&0&1&0&0&0&0\\ 0&0&0&0&0&0&0&0&1&0&0&0\\ 0&0&0&0&0&0&0&0&0&1&0&0\\ 0&0&0&0&0&0&0&0&0&0&1&0\\ 0&0&0&0&0&0&0&0&0&0&0&1 \end{pmatrix}$$

(Eq. 22)

Together, the fold-H and fold-S matrices generate all the permutations found. This Clifford group has order 1132462080, and is a subgroup of the full Clifford group on 6 logical qubits. Adding a diagonal single qubit Clifford gate $U^{\otimes 6}$ will complete the group to the full Clifford group, and so will adding $SWAP_1 5$. We also note that through a basis change, the above fold-H generator will act as $H^{\otimes 4}$ on the first 4 of 6 logicals (logical qubits), and one of the fold-S generators will act as $S^{\otimes 4}$ on the first 4 of 6 logicals. Therefore, giving the full single qubit Clifford group repeated on the first 4 logicals, the present disclosure also has $CZ_{12} \otimes CZ_{34}$ and $CZ_{13} \otimes CZ_{24}$ on those logicals. It is noted that the Clifford gate $U^{\otimes 6}$ and $SWAP_1 5$ above complete the gate set, as a numerical check.

It is also worth noting that, since the code is CSS, the code admits a transversal CNOT between code blocks.

V. SURGERY

To generate additional logical operations, surgery is now considered. This is a generalization of the type of surgery previously considered for two-dimensional toric code patches. Due to the larger number of logical qubits, the effect on the logical qubits is more complicated, and due to the potentially complicated HNF, the present disclosure constructs an appropriate geometry for surgery.

A. Surgery Operation on One or Two Code Blocks

First, consideration is for a surgery operation that combines two code blocks into a single code block. Each code block has 6 logical qubits, and the combined code block also has 6 logical qubits, so the effect of the surgery is to measure 6 logical operators.

An operation is performed in the present disclosure. The operation takes two code blocks. Topologically, each is some cellulation of a four-torus. The operation then cuts each open along some hyperplane of the four-torus. Labelling the four directions of a standard four-torus by 1,2,3,4, the operation picks some direction $i \in \{1,2,3,4\}$, and cuts open each four-torus at some arbitrarily chosen value of $x_i$, exposing two hyperplanes (a hyperplane is three-dimensional in this case). The operation then performs surgery, gluing each hyperplane of a given torus to a hyperplane of the other torus, so that the result is a single four-torus. Then, the present disclosure reverses this operation.

A four-dimensional toric code corresponds to some cellulation of the four-torus. So, this operation in practice means starting with two code blocks. Then, the operations define a new code by removing stabilizers in each code block which cross the hyperplane where surgery is performed, and by adding additional stabilizers. These are stabilizers of the toric code on the single larger torus which cross the surgery location. The present disclosure then measures stabilizers of this new code for some number of rounds, and then finally reverses the operation, by measuring stabilizers of the original code.

Thus, in practice, this means first measuring stabilizers of two four-dimensional toric codes. Then, the disclosure regards qubits of those two code blocks as being qubits in a single, larger four-dimensional toric code, and measures stabilizers of that code, before returning to the original code.

Since the larger toric code has only 6 logical qubits, indeed the effect is to measure at least 6 logical operators. The present disclosure will now show that indeed exactly 6 logical operators are measured, so that it can be seen which ones are measured. The present disclosure can identify logical operators by giving both a pair of directions, e.g., $(j, k)$ where $j \neq k$ and also whether it is an $X$-type or $Z$-type logical operator. The present disclosure writes such a logical operator

in the first code block as $X_{j,k}$ or $Z_{j,k}$, depending on whether it is $X$-type or $Z$-type, and writes the operators in the second code block as $X'_{j,k}$ or $Z'_{j,k}$. Then, the logical operator can be supported on a plane stretching in the $j$ and $k$ directions, at fixed values of the other two coordinates. With this notation, and $X$-type logical operator with directions (1,2) will anticommute with a $Z$-type logical operator with directions (3,4), for example. If $i \neq j$ and $i \neq k$, then the logical operator can be supported on a plane not intersecting the cut, but one may choose, by multiplying by stabilizers, that plane to lie in the hyperplane exposed by the cut. Then, measurement of the added stabilizers of the code in the larger four-torus will measure the product of the corresponding logical operators in the two code blocks. That is, for $i$ = 1 for example, the process measures the products $X_{2,3}X'_{2,3}$, $X_{2,4}X'_{2,4}$, $X_{3,4}X'_{3,4}$, $Z_{2,3}Z'_{2,3}$, $Z_{2,4}Z'_{2,4}$, $Z_{3,4}Z'_{3,4}$.

On the other hand, no product of operators $X_{1,k}$ or $X'_{1,k}$ or $Z_{1,k}$ or $Z'_{1,k}$ is measured by the measurement of the stabilizers of the larger four-dimensional toric code near the surgery location, because any representative of those operators or of a nontrivial product of them necessarily has some support away from the surgery location. Using two primes on a logical operator to denote the logical operator on the larger code, the present disclosure has that $X''_{1,k} = X_{1,k}X'_{1,k}$ and similarly $Z''_{1,k} = Z_{1,k}Z'_{1,k}$, as there are representatives of $X''_{1,k}$ and $Z''_{1,k}$ which may be decomposed in this form.

This thus defines the surgery operation. By doing this, the operation measures exactly the 6 products of logical operators given above.

If, then, the disclosure initializes the second code block to the state where all $X$-type logical operators are equal to +1, performs this surgery, and then finally measures the second code block in the $X$ basis, so that the disclosure is concerned only with the effect on the 6 logical qubits in the first code block, the effect of the surgery is to measure $X'_{1,k}$ for all $k$. A similar process may be done with $X$ and $Z$ interchanged.

The same result may be achieved by cutting open a single four-dimensional torus, adding $X$-type or $Z$-type boundary conditions on the given face, and then undoing the operation. Indeed, in this case, it suffices to choose some region near the cut (so some three-dimensional volume) which supports either $X$-type or $Z$-type logical operators $X_{1,k}$ or $Z_{1,k}$, and then measure all qubits in that region in either the $X$ or $Z$ basis.

B. Geometry

The description now considers geometry. Suppose each of the two code patches (or code blocks) is based on a four-dimensional lattice with Hermite normal form

$$\begin{pmatrix} A_{11} & A_{12} & A_{13} & A_{14} \\ 0 & A_{22} & A_{23} & A_{24} \\ 0 & 0 & A_{33} & A_{34} \\ 0 & 0 & 0 & A_{44} \end{pmatrix}.$$

A geometry is chosen for the larger torus by picking one of the four rows and doubling all entries in that row. For example, if the present disclosure picks the second row, then the resulting matrix for the larger code is then

$$\begin{pmatrix} A_{11} & A_{12} & A_{13} & A_{14} \\ 0 & 2A_{22} & 2A_{23} & 2A_{24} \\ 0 & 0 & A_{33} & A_{34} \\ 0 & 0 & 0 & A_{44} \end{pmatrix}.$$

Entries of this matrix are referred to by $A''_{ij}$.

The present disclosure then defines a map from the smaller code to the larger code. First, the present disclosure gives a map of vertices of the cellulation of the four-torus defining the code (i.e., vertices of $\mathbb{Z}^4$ mod the lattice defined by the HNF). The present disclosure parameterizes those vertices by four integers, $x_1$, $x_2$, $x_3$, $x_4$, with $0 \leq x_i < A_{ii}$ in the smaller codes, each such vertex then corresponds to a vertex ($x_1$, $x_2$, $x_3$, $x_4$) in $\mathbb{Z}^4$. In the larger codes, the present disclosure instead has $0 \leq x_i < A''_{ii}$. Then, the present disclosure maps a vertex $x_1$, $x_2$, $x_3$, $x_4$ in the first code block to $x_1$, $x_2$, $x_3$, $x_4$ in the larger code, while the disclosure maps a vertex $x_1$, $x_2$, $x_3$, $x_4$ to $x_1 + A_{11} \bmod A''_{11}$, $x_2 + A_{22} \bmod A''_{22}$, $x_3 + A_{33} \bmod A''_{33}$, $x_4 + A_{44} \bmod A''_{44}$, For example, if the present disclosure chose to double all entries in the second row, then this is $x_1$, $x_2 + A_{22}$, $x_3$, $x_4$.

Given this map of vertices, the present disclosure defines a map of qubits, regarding each qubit (which is a plaquette in a pair of directions ($i,j$)) as being identified by some vertex $v$ and by the pair of directions $i$, $j$, with the center of the plaquette at coordinate $v + (1/2)\hat{x}_i + (1/2)\hat{x}_j$, where $\hat{x}_i$ is a unit vector in the i-th direction.

C. Applications

With this surgery, one immediate application is to teleport three logical qubits from one code block to another. Consider two code blocks. The present disclosure may measure $X'_{j,k}$ for any given $j$ for all $k \neq j$, measuring three qubits of the second block leaving it with only three remaining logical qubits. The present disclosure then performs surgery, measuring $X_{j,k}X'_{j,k}$ for all $k \neq j$ and $Z_{j,k}Z'_{j,k}$. The present disclosure then measures $Z_{j,k}$ for all $k \neq j$. This sequence of measurements teleports the three logical qubits from the first block to the second block, after measuring out three logical qubits in the second block.

By then repeating the process, the present disclosure can teleport a single qubit from one block to a third block. Prepare blocks 2 and 3 in a definite logical state. Start by teleporting the three logical qubits with $Z$-type logical operators $Z_{1,2}$, $Z_{1,3}$, and $Z_{1,4}$ (and corresponding $X$-type logical operators $X_{3,4}$, $X_{2,4}$, $X_{2,3}$) from the first block to the second block. Then, choosing next the cut direction to be direction 2, the present disclosure can teleport only the single qubit with $Z$-type logical operator from the first block to the third block.

D. Distance Under Surgery Operations

Finally, consideration is now for the distance of the code under these surgery operations.

The present disclosure begins with the two-dimensional case, for comparison, doing surgery on a pair of two-tori. Now each logical qubit is identified by only a single direction. Suppose the present disclosure is jointly measuring, for example, $Z_1Z'_1$ and $X_1X'_1$. The product $Z_1Z'_1$ is inferred from the product of $Z$-type stabilizer measurements along a single location of the cut in the larger torus. However, there are two such locations, i.e., two different lines are cut in the larger torus. So, to create an undetectable logical error, one needs two errors in stabilizer measurement. The present disclosure calls this number, 2, the "boundary distance", denoting the minimal number of errors that can lead to an undetectable logical error in the surgery process.

So, if the code has distance $d$, it requires ~ $d$ measurement rounds in the larger torus to make the boundary distance also equal to $d$.

Now consider a three-dimensional toric code. This code is not self-dual. The present disclosure fixes the degrees of freedom to be on edges, and fixes the stabilizers to be $ZZZZ$ around plaquettes and to be $ZZZZZZ$ on vertices. Then, there are line-like logical $Z$ operators and surface-like logical X operators. So, if the torus is a standard $L$-by-$L$-by-$L$ torus, the logical $Z$ operators have weight ~ $L$, while the logical $X$ operators have weight $L^2$. The present disclosure cuts the three-torus to create two surfaces which are two-tori and then does surgery.

If one measures $Z$-type logical operators (either by surgery on two tori or by measuring qubits in the $Z$ basis in a plane), it takes $L$ errors to make an undetectable logical error as there are $L$ inequivalent, nonoverlapping representatives in the plane. A more general way to compute this number (which gives a better estimate for more general geometries) is that $Z$ measurements are on plaquettes in the three-dimensional code. Considering plaquettes in which one direction crosses the cut, then a plaquette is defined by a single edge direction in the plane of the cut. The present disclosure can regard the errors as corresponding to edges in the cut. Errors in measurements then form some 1-cochain, i.e., some sum of edges; in order for these errors to be undetectable, the chain must form a 1-cocycle, i.e. be closed; and in order for it to cause a logical error, it must form a homologically non-trivial 1-cocycle. Finally, there are two different cut surfaces, so the boundary distance is twice the length of the minimum homoloogically non-trivial 1-cocycle. On the other hand, it takes only 2 errors to make an undetectable error in the $X$-type measurement. This is consistent with $X$-type logical operators having higher distance in the bulk: a higher distance for logical $X$ errors implies a more resilient logical $Z$ information, and hence a larger boundary distance.

So, again if one measures for ~ $L$ rounds on the boundary, then the boundary $Z$ distance is as large as the $X$ distance of the code (i.e., ~ $L^2$) and vice-versa.

Finally, the present disclosure considers surgery on the four-torus. Now, $Z$-stabilizers are on 3-cells of the code, and $Z$-stabilizers crossing the cut correspond to 2-cells in the plane of the cut. The boundary distance for $Z$ errors is then twice the length of the minimum homoloogically non-trivial 2-cocycle. Conversely, $X$-stabilizers are on 1-cells of the code, and $X$-stabilizers such that qubits in their coboundary cross the cut still correspond to 1-cells in the plane of the cut (there is no shift in dimension). So, the boundary distance for $Z$ errors is then twice the length of the minimum homoloogically non-trivial 1-cycle. Both these distances then are equal, in the particular cellulation of the four-torus that is chosen, to twice the minimum, over nonzero vectors in the lattice which lie in the given hyperplane, of the $\ell_1$ norm of that vector.

FIG. 9 depicts a flowchart of a computer-implemented method 900 for using crystalline symmetries for quantum operations according to one or more embodiments. The computer-implemented method can be performed by the classical computer system 100 in conjunction with the quantum computer 10, as discussed herein. The method 900 includes determining that qubit locations of qubits in a quantum computer 10 are identified with locations in a crystal at block 902 and determining a set of space group symmetries of the crystal at block 904. The method 900 includes using the set of space group symmetries to determine the quantum operations on the qubits 14 at block 906 and corresponding/assigning each

space group symmetry of the set of space group symmetries to logical operations at block 908. Also, the method 900 includes causing the logical operations to be performed on the qubits 14 of the quantum computer 10.

Additionally, using the set of space group symmetries to determine the quantum operations on the qubits comprises: determining a map (e.g., which can be stored in computer memory 22A, system memory 103, mass storage 110, etc.) of a qubit permutation that maps support of each Pauli X-stabilizer to support of a Pauli Z-stabilizer, applying the qubit permutation to the qubits 14 in the map, and applying a global transversal Hadamard gate to the qubits 14 in the map.

Further, the using the set of space group symmetries to determine the quantum operations on the qubits comprises: determining a map (e.g., which can be stored in computer memory 22A, system memory 103, mass storage 110, etc.) of a qubit permutation that interchanges a support of each Paul X-stabilizer to support of a Pauli Z-stabilizer, applying a controlled Z (CZ) operation to the qubits 14 that are in the map, and applying a Swap operation to the qubits 14 that are left invariant. The quantum operations on the qubits 14 comprise one or more of a qubit permutation, a fold-H traversal, or a fold-S traversal. The corresponding each space group symmetry of the set of space group symmetries to logical operations comprises searching over which ones of the set of space group symmetries correspond to qubit permutations, fold-H, or fold-S, and recording the ones in a list (e.g., which can be stored in computer memory 22A, system memory 103, mass storage 110, etc.) for enacting the logical operations on the quantum computer 10.

Additionally, the logical operations corresponding to the each space symmetry of the set of space group symmetries comprises performing physical actions on the qubits 14. The logical operations are performed on the qubits of the quantum computer during compilation.

FIG. 10 depicts a flowchart of a computer-implemented method 1000 for performing lattice surgery according to one or more embodiments. The computer-implemented method can be performed by the classical computer system 100 in conjunction with the quantum computer 10, as discussed herein. The method 1000 includes inputting two or more four-dimensional (4D) toric codes on a rotated lattice at block 1002, and cutting the two or more 4D toric codes along hyperplanes so as to have a first hyperplane of one of the two or more 4D toric codes and a second hyperplane of another one of the two or more 4D toric codes at block 1004. The method 1000 includes gluing the first and second hyperplanes together of the one and the another one of the two or more 4D toric codes so as to result in a single 4D toric code corresponding to a 4D torus at block 1006 and measuring qubits 14 in the single 4D toric code.

Further, the two or more 4D toric codes correspond to two or more code blocks. Cutting the two or more 4D toric codes along the hyperplanes so as to have the first hyperplane of one of the two or more 4D toric codes and the second hyperplane of the another one of the two or more 4D toric codes comprises: removing stabilizers in each of the two or more code blocks that cross the hyperplanes where the cutting is performed; and adding additional stabilizers to the single 4D toric code at a location of gluing the first and second hyperplanes together to form the single 4D toric code.

Also, the method includes measuring the additional stabilizers of the single 4D toric code. The method includes reversing the cutting and the gluing by measuring the stabilizers of the two or more code blocks. The measuring the qubits in the single 4D toric code comprises performing XX and ZZ measurements between triples of the qubits 14.

Turning now to FIG. 4, a computer system 100 is generally shown in accordance with one or more embodiments of the invention. The computer system 100 can be an electronic, computer framework comprising and/or employing any number and combination of computing devices and networks utilizing various communication technologies, as described herein. The computer system 100 can be easily scalable, extensible, and modular, with the ability to change to different services or reconfigure some features independently of others. The computer system 100 may be, for example, a server, desktop computer, laptop computer, tablet computer, or smartphone. In some examples, computer system 100 may be a cloud computing node. Computer system 100 may be described in the general context of computer system executable instructions, such as program modules, being executed by a computer system. Generally, program modules may include routines, programs, objects, components, logic, data structures, and so on that perform particular tasks or implement particular abstract data types. Computer system 100 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 4 the computer system 100 has one or more central processing units (CPU(s)) 101a, 101b, 101c, etc., (collectively or generically referred to as processor(s) 101). The processors 101 can be a single-core processor, multi-core processor, computing cluster, or any number of other configurations. The processors 101, also referred to as processing circuits, are coupled via a system bus 102 to a system memory 103 and various other components. The system memory 103 can include a read only memory (ROM) 104 and a random access memory (RAM) 105. The ROM 104 is coupled to the system bus 102 and may include a basic input/output system (BIOS) or its successors like Unified Extensible Firmware Interface (UEFI), which controls certain basic functions of the computer system 100. The RAM is read-write memory coupled to the system bus 102 for use by the processors 101. The system memory 103 provides temporary memory space for operations of said instructions during operation. The system memory 103 can include random access memory (RAM), read only memory, flash memory, or any other suitable memory systems.

The computer system 100 comprises an input/output (I/O) adapter 106 and a communications adapter 107

coupled to the system bus 102. The I/O adapter 106 may be a small computer system interface (SCSI) adapter that communicates with a hard disk 108 and/or any other similar component. The I/O adapter 106 and the hard disk 108 are collectively referred to herein as a mass storage 110.

Software 111 for execution on the computer system 100 may be stored in the mass storage 110. The mass storage 110 is an example of a tangible storage medium readable by the processors 101, where the software 111 is stored as instructions for execution by the processors 101 to cause the computer system 100 to operate, such as is described herein below with respect to the various Figures. Examples of computer program product and the execution of such instruction is discussed herein in more detail. The communications adapter 107 interconnects the system bus 102 with a network 112, which may be an outside network, enabling the computer system 100 to communicate with other such systems. In one embodiment, a portion of the system memory 103 and the mass storage 110 collectively store an operating system, which may be any appropriate operating system to coordinate the functions of the various components shown in FIG. 4.

Additional input/output devices are shown as connected to the system bus 102 via a display adapter 115 and an interface adapter 116. In one embodiment, the adapters 106, 107, 115, and 116 may be connected to one or more I/O buses that are connected to the system bus 102 via an intermediate bus bridge (not shown). A display 119 (e.g., a screen or a display monitor) is connected to the system bus 102 by the display adapter 115, which may include a graphics controller to improve the performance of graphics intensive applications and a video controller. A keyboard 121, a mouse 122, a speaker 123, a microphone 124, etc., can be interconnected to the system bus 102 via the interface adapter 116, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI) and the Peripheral Component Interconnect Express (PCIe). Thus, as configured in FIG. 4, the computer system 100 includes processing capability in the form of the processors 101, storage capability including the system memory 103 and the mass storage 110, input means such as the keyboard 121, the mouse 122, and the microphone 124, and output capability including the speaker 123 and the display 119.

In some embodiments, the communications adapter 107 can transmit data using any suitable interface or protocol, such as the internet small computer system interface, among others. The network 112 may be a cellular network, a radio network, a wide area network (WAN), a local area network (LAN), or the Internet, among others. An external computing device may connect to the computer system 100 through the network 112. In some examples, an external computing device may be an external webserver or a cloud computing node.

It is to be understood that the block diagram of FIG. 4 is not intended to indicate that the computer system 100 is to include all of the components shown in FIG. 4. Rather, the computer system 100 can include any appropriate fewer or additional components not illustrated in FIG. 4 (e.g., additional memory components, embedded controllers, modules, additional network interfaces, etc.). Further, the embodiments described herein with respect to computer system 100 may be implemented with any appropriate logic, wherein the logic, as referred to herein, can include any suitable hardware (e.g., a processor, an embedded controller, or an application specific integrated circuit, among others), software (e.g., an application, among others), firmware, or any suitable combination of hardware, software, and firmware, in various embodiments.

Alternatively or in addition to the other examples described herein, examples include any combination of the following clauses:

Clause A. A method for using crystalline symmetries for quantum operations, the method comprising: determining that qubit locations of qubits in a quantum computer are identified with locations in a crystal; determining a set of space group symmetries of the crystal; using the set of space group symmetries to determine the quantum operations on the qubits; corresponding each space group symmetry of the set of space group symmetries to logical operations; and causing the logical operations to be performed on the qubits of the quantum computer.

Clause B. The method of clause A, wherein the using the set of space group symmetries to determine the quantum operations on the qubits comprises: determining a map of a qubit permutation that maps support of each Pauli X-stabilizer to support of a Pauli Z-stabilizer; applying the qubit permutation to the qubits in the map; and applying a global transversal Hadamard gate to the qubits in the map.

Clause C. The method of clause A, wherein the using the set of space group symmetries to determine the quantum operations on the qubits comprises: determining a map of a qubit permutation that interchanges a support of each Paul X-stabilizer to support of a Pauli Z-stabilizer; applying a controlled Z (CZ) operation to the qubits that are in the map; and applying a Swap operation to the qubits that are left invariant.

Clause D. The method of any preceding clause, wherein the quantum operations on the qubits comprise one or more

of a qubit permutation, a fold-H traversal, or a fold-S traversal.

Clause E. The method of any preceding clause, wherein the corresponding each space group symmetry of the set of space group symmetries to logical operations comprises searching over which ones of the set of space group symmetries correspond to permutations, fold-H, or fold-S, and recording the ones in a list for enacting the logical operations on the quantum computer.

Clause F. The method of any preceding clause, wherein the logical operations corresponding to the each space symmetry of the set of space group symmetries comprises performing physical actions on the qubits.

Clause G. The method of any preceding clause, wherein the logical operations are performed on the qubits of the quantum computer during compilation.

Clause H. A system comprising: a memory having computer readable instructions; and one or more processors for executing the computer readable instructions, the computer readable instructions when executed cause the one or more processors to perform operations comprising: determining that qubit locations of qubits in a quantum computer are identified with locations in a crystal; determining a set of space group symmetries of the crystal; using the set of space group symmetries to determine the quantum operations on the qubits; corresponding each space group symmetry of the set of space group symmetries to logical operations; and causing the logical operations to be performed on the qubits of the quantum computer.

Clause I. The system of clause H, wherein the using the set of space group symmetries to determine the quantum operations on the qubits comprises: determining a map of a qubit permutation that maps support of each Pauli X-stabilizer to support of a Pauli Z-stabilizer; applying the qubit permutation to the qubits in the map; and applying a global transversal Hadamard gate to the qubits in the map.

Clause J. The system of clause H, wherein the using the set of space group symmetries to determine the quantum operations on the qubits comprises: determining a map of a qubit permutation that interchanges a support of each Paul X-stabilizer to support of a Pauli Z-stabilizer; applying a controlled Z (CZ) operation to the qubits that are in the map; and applying a Swap operation to the qubits that are left invariant.

Clause K. The system of any of clauses H to J, wherein the quantum operations on the qubits comprise one or more of a qubit permutation, a fold-H traversal, or a fold-S traversal.

Clause L. The system of ay of clauses H to K, wherein the corresponding each space group symmetry of the set of space group symmetries to logical operations comprises searching over which ones of the set of space group symmetries correspond to permutations, fold-H, or fold-S, and recording the ones in a list for enacting the logical operations on the quantum computer.

Clause M. The system of any of clauses H to L, wherein the logical operations corresponding to the each space symmetry of the set of space group symmetries comprises performing physical actions on the qubits.

Clause N. The system of clause H to M, wherein the logical operations are performed on the qubits of the quantum computer during compilation.

Clause O. A method of performing lattice surgery, the method comprising: inputting two or more four-dimensional (4D) toric codes on a rotated lattice; cutting the two or more 4D toric codes along hyperplanes so as to have a first hyperplane of one of the two or more 4D toric codes and a second hyperplane of another one of the two or more 4D toric codes; gluing the first and second hyperplanes together of the one and the another one of the two or more 4D toric codes so as to result in a single 4D toric code corresponding to a 4D torus; and measuring qubits in the single 4D toric code.

Clause P. The method of clause O, wherein the two or more 4D toric codes correspond to two or more code blocks.

Clause Q. The method of clause P, wherein the cutting the two or more 4D toric codes along the hyperplanes so as to have the first hyperplane of one of the two or more 4D toric codes and the second hyperplane of the another one of the two or more 4D toric codes comprises: removing stabilizers in each of the two or more code blocks that cross the hyperplanes where the cutting is performed; and adding additional stabilizers to the single 4D toric code at a location of

gluing the first and second hyperplanes together to form the single 4D toric code.

Clause R. The method of clause Q, further comprising measuring the additional stabilizers of the single 4D toric code.

Clause S. The method of clause Q or clause R, further comprising reversing the cutting and the gluing by measuring the stabilizers of the two or more code blocks.

Clause T. The method of any of clauses O to S, wherein the measuring the qubits in the single 4D toric code comprises performing XX and ZZ measurements between triples of the qubits.

While the disclosure has been described with reference to various embodiments, it will be understood by those skilled in the art that changes may be made and equivalents may be substituted for elements thereof without departing from its scope. The various tasks and process steps described herein can be incorporated into a more comprehensive procedure or process having additional steps or functionality not described in detail herein. In addition, many modifications may be made to adapt a particular situation or material to the teachings of the disclosure without departing from the essential scope thereof. Therefore, it is intended that the present disclosure not be limited to the particular embodiments disclosed, but will include all embodiments falling within the scope thereof.

Unless defined otherwise, technical and scientific terms used herein have the same meaning as is commonly understood by one of skill in the art to which this disclosure belongs.

Various embodiments of the invention are described herein with reference to the related drawings. The drawings depicted herein are illustrative. There can be many variations to the diagrams and/or the steps (or operations) described therein without departing from the spirit of the disclosure. For instance, the actions can be performed in a differing order or actions can be added, deleted or modified. All of these variations are considered a part of the present disclosure.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. The term "or" means "and/or" unless clearly indicated otherwise by context.

The terms "received from", "receiving from", "passed to", "passing to", etc. describe a communication path between two elements and does not imply a direct connection between the elements with no intervening elements/connections therebetween unless specified. A respective communication path can be a direct or indirect communication path.

The corresponding structures, materials, acts, and equivalents of all means or step plus function elements in the claims below are intended to include any structure, material, or act for performing the function in combination with other claimed elements as specifically claimed.

For the sake of brevity, conventional techniques related to making and using aspects of the invention may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

The present invention may be a system, a method, and/or a computer program product at any possible technical detail level of integration. The computer program product may include a computer readable storage medium (or media) having computer readable program instructions thereon for causing a processor to carry out aspects of the present invention.

Various embodiments are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other

programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments described herein have been presented for purposes of illustration, but are not intended to be exhaustive or limited to the form(s) disclosed. The embodiments were chosen and described in order to best explain the principles of the disclosure. Many modifications and variations will be apparent to those of ordinary skill in the art without departing from the scope of the described embodiments. The terminology used herein was chosen to best explain the principles of the various embodiments, the practical application or technical improvement over technologies found in the marketplace, or to enable others of ordinary skill in the art to understand the embodiments described herein.

## Claims

**1.** A method (900) for using crystalline symmetries for quantum operations, the method comprising:

determining (902) that qubit locations of qubits (14) in a quantum computer (10) are identified with locations in a crystal;
determining (904) a set of space group symmetries of the crystal;
using (906) the set of space group symmetries to determine the quantum operations on the qubits (14);
corresponding (908) each space group symmetry of the set of space group symmetries to logical operations; and
causing (910) the logical operations to be performed on the qubits (14) of the quantum computer (10).

**2.** The method of claim 1, wherein the using the set of space group symmetries to determine the quantum operations on the qubits comprises:

determining a map of a qubit permutation that maps support of each Pauli X-stabilizer to support of a Pauli Z-stabilizer;
applying the qubit permutation to the qubits in the map; and
applying a global transversal Hadamard gate to the qubits in the map.

**3.** The method of any preceding claim, wherein the using the set of space group symmetries to determine the quantum operations on the qubits comprises:

determining a map of a qubit permutation that interchanges a support of each Paul X-stabilizer to support of a Pauli Z-stabilizer;
applying a controlled Z "CZ" operation to the qubits that are in the map; and
applying a Swap operation to the qubits that are left invariant.

**4.** The method of any preceding claim, wherein the quantum operations on the qubits comprise one or more of a qubit permutation, a fold-H traversal, or a fold-S traversal.

**5.** The method of any preceding claim, wherein the corresponding each space group symmetry of the set of space group symmetries to logical operations comprises searching over which ones of the set of space group symmetries correspond to permutations, fold-H, or fold-S, and recording the ones in a list for enacting the logical operations on the quantum computer.

**6.** The method of any preceding claim, wherein the logical operations corresponding to the each space symmetry of the

set of space group symmetries comprises performing physical actions on the qubits.

**7.** The method of any preceding claim, wherein the logical operations are performed on the qubits of the quantum computer during compilation.

**8.** A system comprising:

a memory (22A, 103, 110) having computer readable instructions; and
one or more processors (20A, 101) for executing the computer readable instructions, the computer readable instructions when executed cause the one or more processors to perform operations comprising:

determining (902) that qubit locations of qubits (14) in a quantum computer (10) are identified with locations in a crystal;
determining (905) a set of space group symmetries of the crystal;
using (906) the set of space group symmetries to determine the quantum operations on the qubits (14);
corresponding (908) each space group symmetry of the set of space group symmetries to logical operations; and
causing (910) the logical operations to be performed on the qubits (14) of the quantum computer (10).

**9.** The system of claim 8, wherein the using the set of space group symmetries to determine the quantum operations on the qubits comprises:

determining a map of a qubit permutation that maps support of each Pauli X-stabilizer to support of a Pauli Z-stabilizer;
applying the qubit permutation to the qubits in the map; and
applying a global transversal Hadamard gate to the qubits in the map.

**10.** A method (1000) of performing lattice surgery, the method comprising:

inputting (1002) two or more four-dimensional "4D" toric codes on a rotated lattice;
cutting (1004) the two or more 4D toric codes along hyperplanes so as to have a first hyperplane of one of the two or more 4D toric codes and a second hyperplane of another one of the two or more 4D toric codes;
gluing (1006) the first and second hyperplanes together of the one and the another one of the two or more 4D toric codes so as to result in a single 4D toric code corresponding to a 4D torus; and
measuring (1008) qubits in the single 4D toric code.

**11.** The method of claim 10, wherein the two or more 4D toric codes correspond to two or more code blocks.

**12.** The method of claim 11, wherein the cutting the two or more 4D toric codes along the hyperplanes so as to have the first hyperplane of one of the two or more 4D toric codes and the second hyperplane of the another one of the two or more 4D toric codes comprises:

removing stabilizers in each of the two or more code blocks that cross the hyperplanes where the cutting is performed; and
adding additional stabilizers to the single 4D toric code at a location of gluing the first and second hyperplanes together to form the single 4D toric code.

**13.** The method of claim 12, further comprising measuring the additional stabilizers of the single 4D toric code.

**14.** The method of claim 12, further comprising reversing the cutting and the gluing by measuring the stabilizers of the two or more code blocks.

**15.** The method of any of claims 10 to 14, wherein the measuring the qubits in the single 4D toric code comprises performing XX and ZZ measurements between triples of the qubits.

FIG. 1

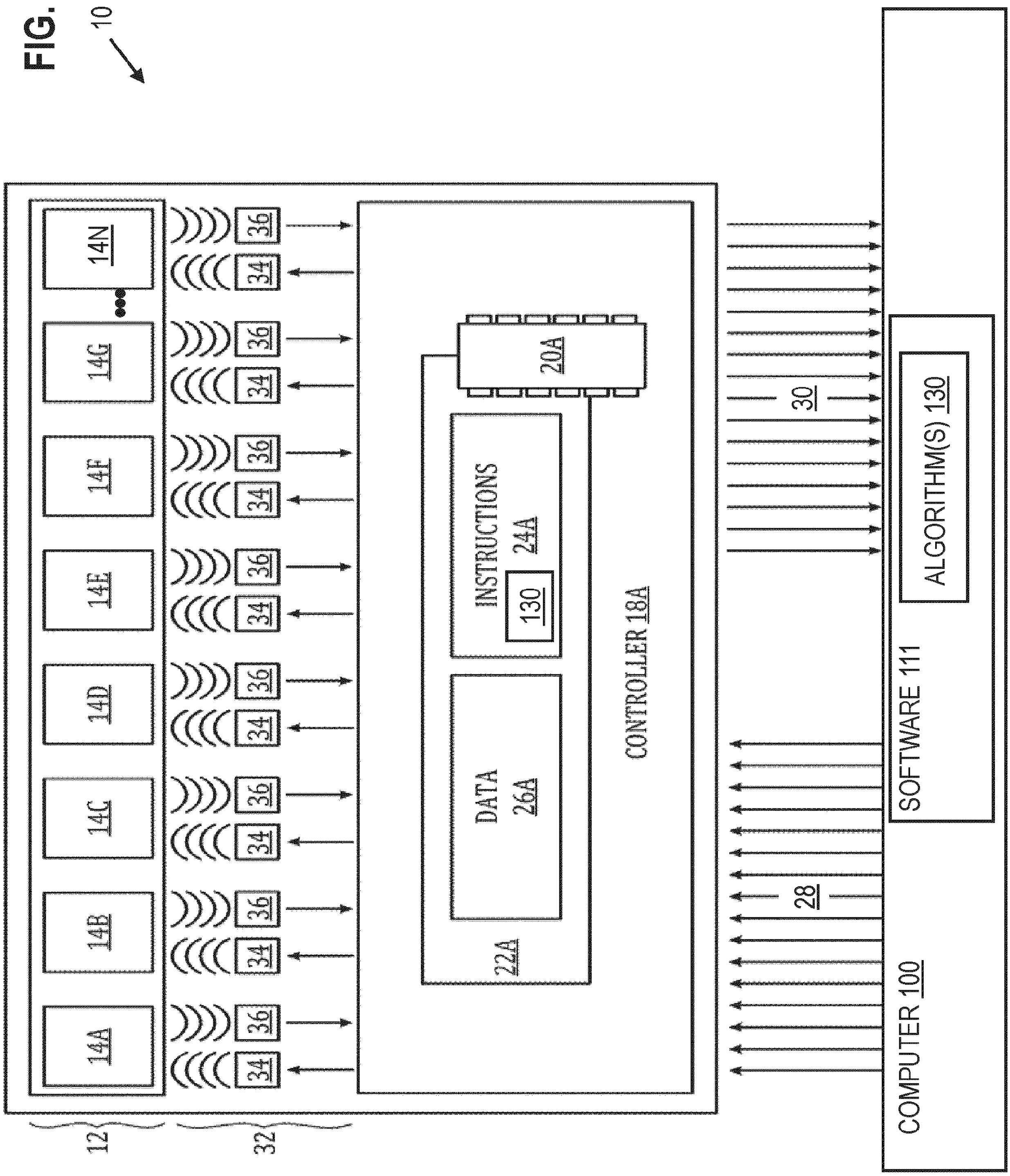
10
14A
14B
14C
14D
14E
14F
14G
14N
12
34
36
32
20A
INSTRUCTIONS
24A
130
DATA
26A
22A
CONTROLLER 18A
30
28
ALGORITHM(S) 130
SOFTWARE 111
COMPUTER 100

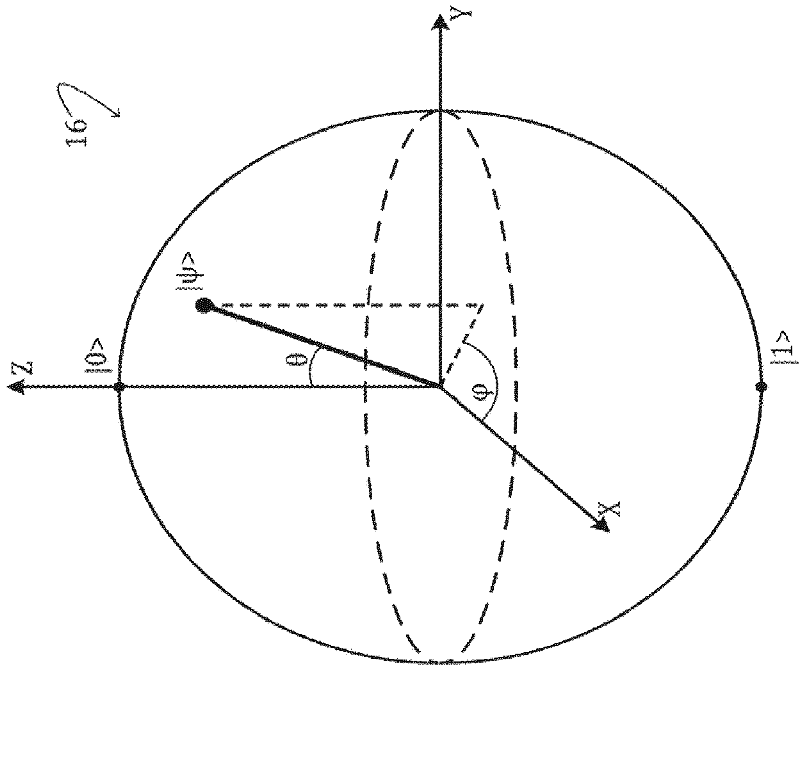


FIG. 2

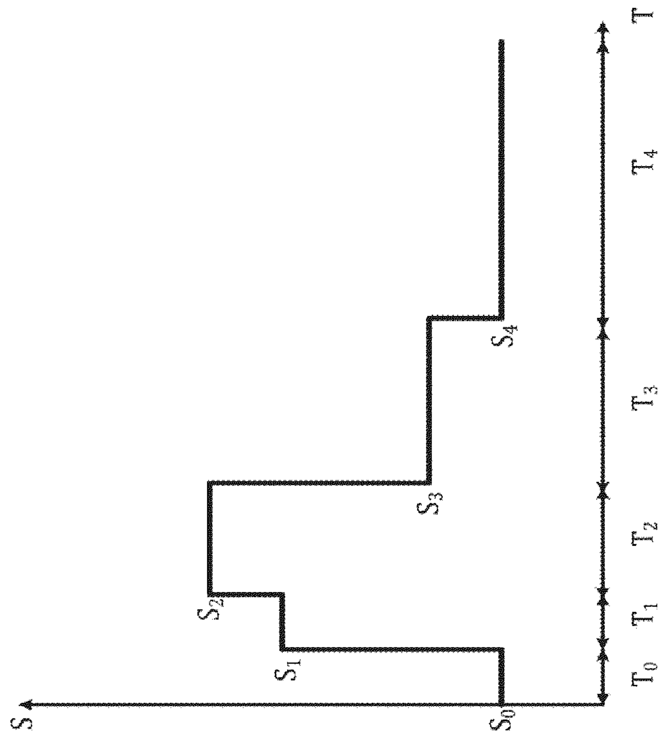


FIG. 3

FIG. 4

100

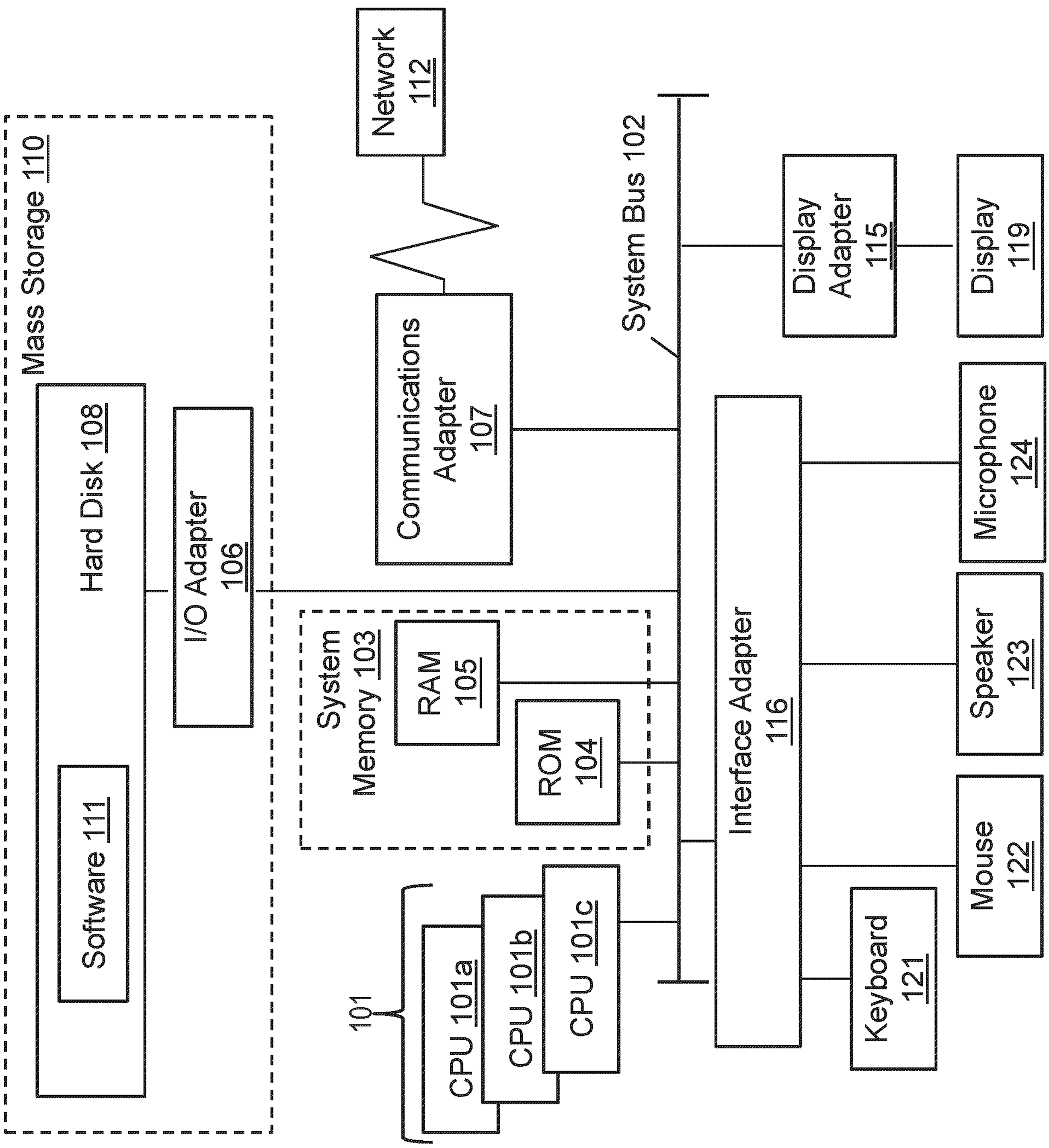

Mass Storage 110
Hard Disk 108
Software 111
I/O Adapter 106
Network 112
Communications Adapter 107
System Memory 103
RAM 105
ROM 104
101
CPU 101a
CPU 101b
CPU 101c
System Bus 102
Display Adapter 115
Display 119
Interface Adapter 116
Microphone 124
Speaker 123
Mouse 122
Keyboard 121

FIG. 5

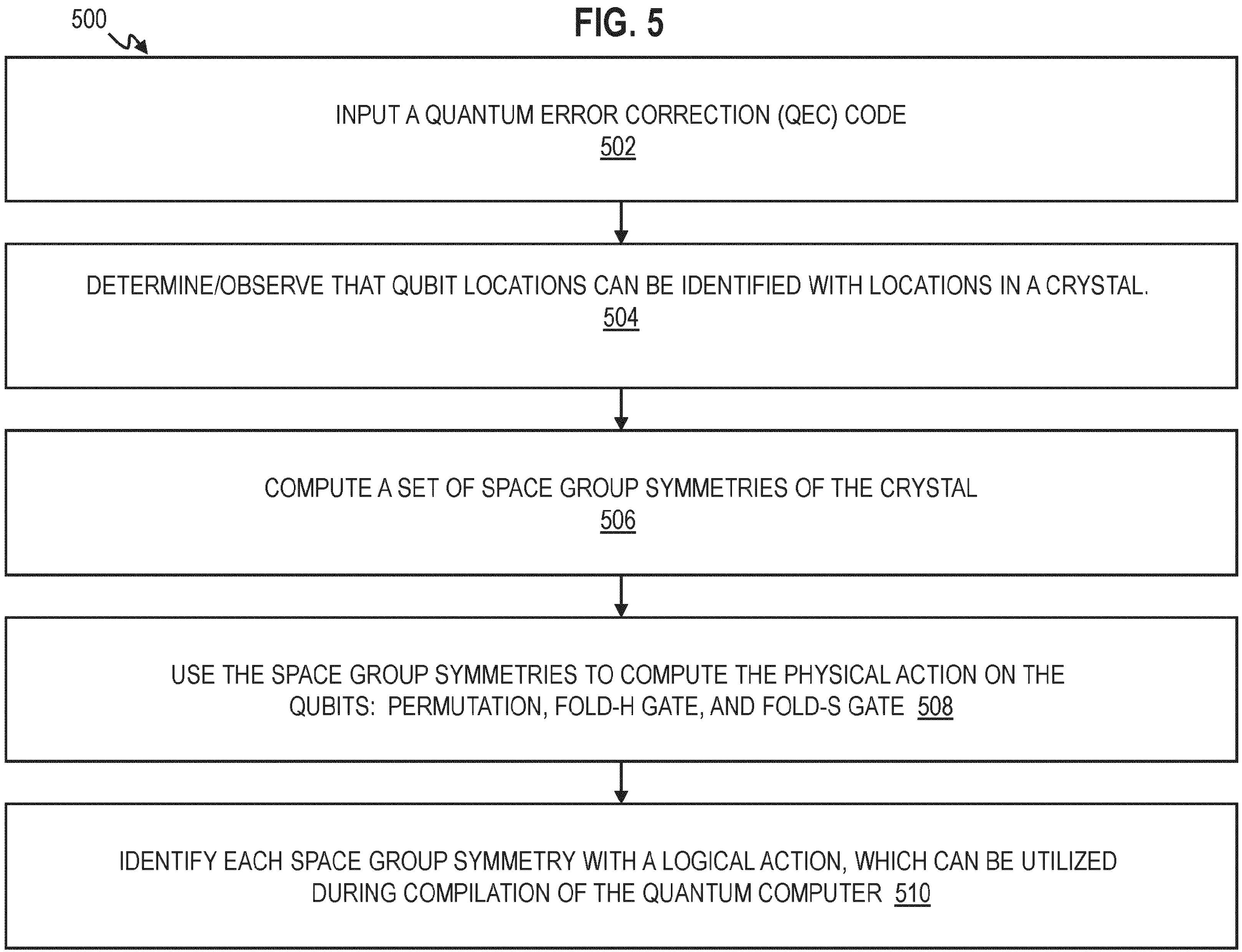
500
INPUT A QUANTUM ERROR CORRECTION (QEC) CODE
502
DETERMINE/OBSERVE THAT QUBIT LOCATIONS CAN BE IDENTIFIED WITH LOCATIONS IN A CRYSTAL.
504
COMPUTE A SET OF SPACE GROUP SYMMETRIES OF THE CRYSTAL
506
USE THE SPACE GROUP SYMMETRIES TO COMPUTE THE PHYSICAL ACTION ON THE QUBITS: PERMUTATION, FOLD-H GATE, AND FOLD-S GATE 508
IDENTIFY EACH SPACE GROUP SYMMETRY WITH A LOGICAL ACTION, WHICH CAN BE UTILIZED DURING COMPILATION OF THE QUANTUM COMPUTER 510

FIG. 6

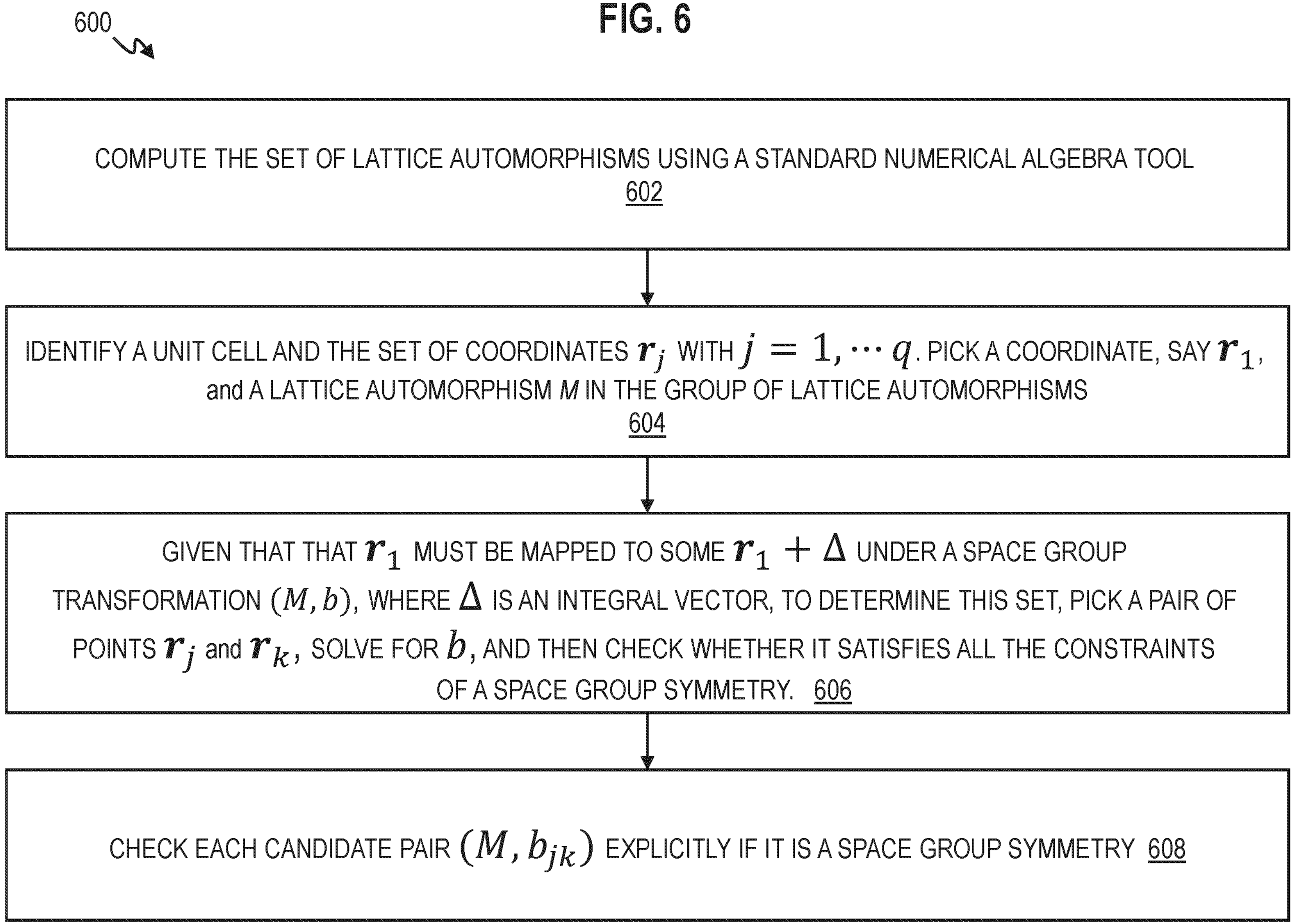
600
COMPUTE THE SET OF LATTICE AUTOMORPHISMS USING A STANDARD NUMERICAL ALGEBRA TOOL 602
IDENTIFY A UNIT CELL AND THE SET OF COORDINATES $\boldsymbol{r}_j$ WITH $j = 1, \cdots q$. PICK A COORDINATE, SAY $\boldsymbol{r}_1$, and A LATTICE AUTOMORPHISM $M$ IN THE GROUP OF LATTICE AUTOMORPHISMS 604
GIVEN THAT THAT $\boldsymbol{r}_1$ MUST BE MAPPED TO SOME $\boldsymbol{r}_1 + \Delta$ UNDER A SPACE GROUP TRANSFORMATION $(M, b)$, WHERE $\Delta$ IS AN INTEGRAL VECTOR, TO DETERMINE THIS SET, PICK A PAIR OF POINTS $\boldsymbol{r}_j$ and $\boldsymbol{r}_k$, SOLVE FOR $b$, AND THEN CHECK WHETHER IT SATISFIES ALL THE CONSTRAINTS OF A SPACE GROUP SYMMETRY. 606
CHECK EACH CANDIDATE PAIR $(M, b_{jk})$ EXPLICITLY IF IT IS A SPACE GROUP SYMMETRY 608

FIG. 7

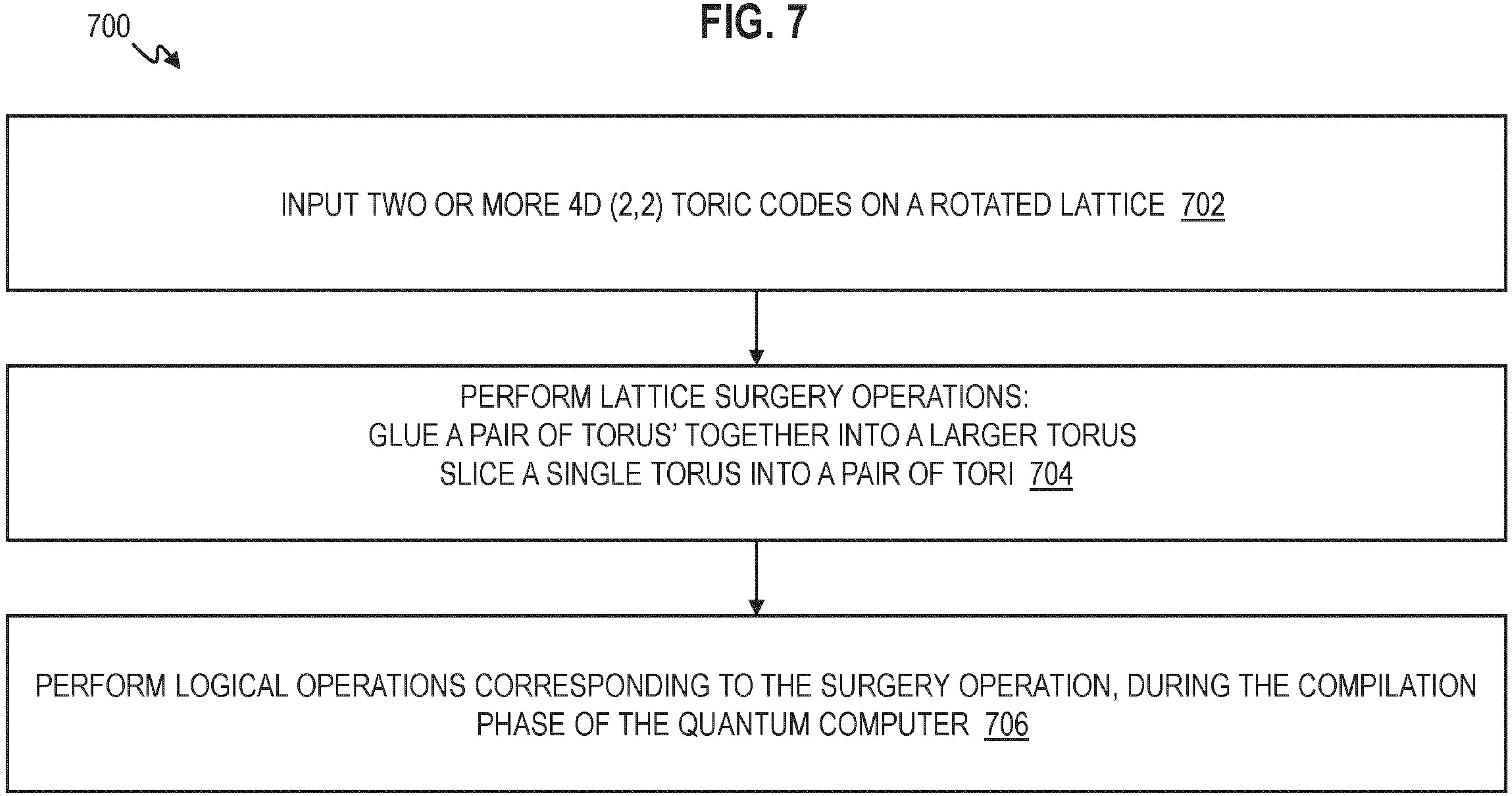
700
INPUT TWO OR MORE 4D (2,2) TORIC CODES ON A ROTATED LATTICE 702
PERFORM LATTICE SURGERY OPERATIONS:
GLUE A PAIR OF TORUS' TOGETHER INTO A LARGER TORUS
SLICE A SINGLE TORUS INTO A PAIR OF TORI 704
PERFORM LOGICAL OPERATIONS CORRESPONDING TO THE SURGERY OPERATION, DURING THE COMPILATION PHASE OF THE QUANTUM COMPUTER 706

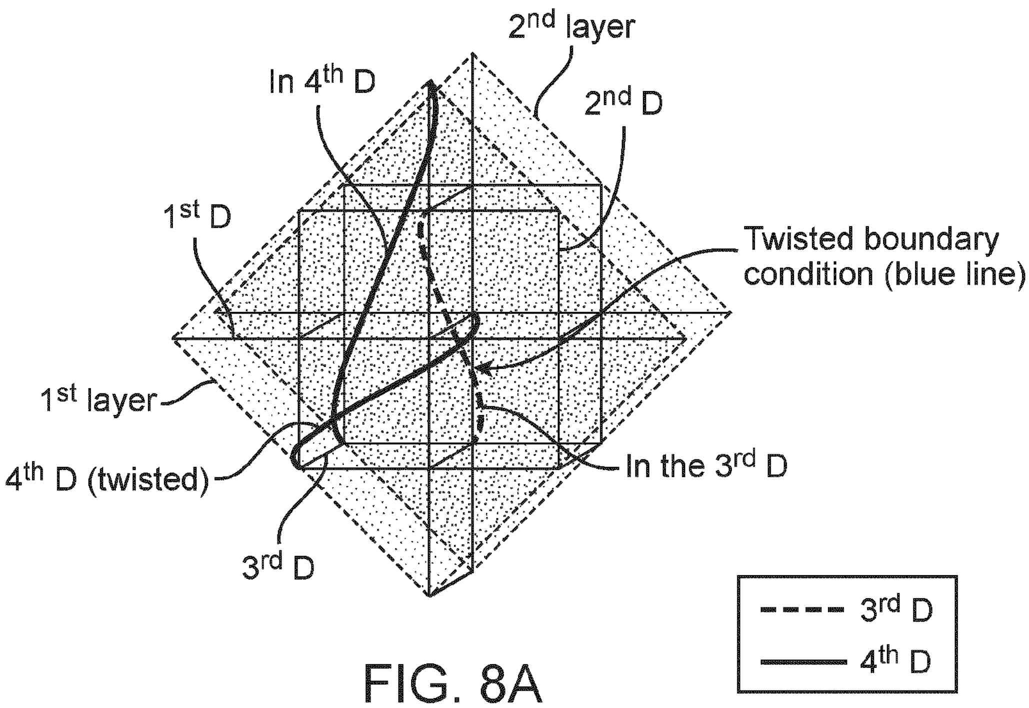


FIG. 8A

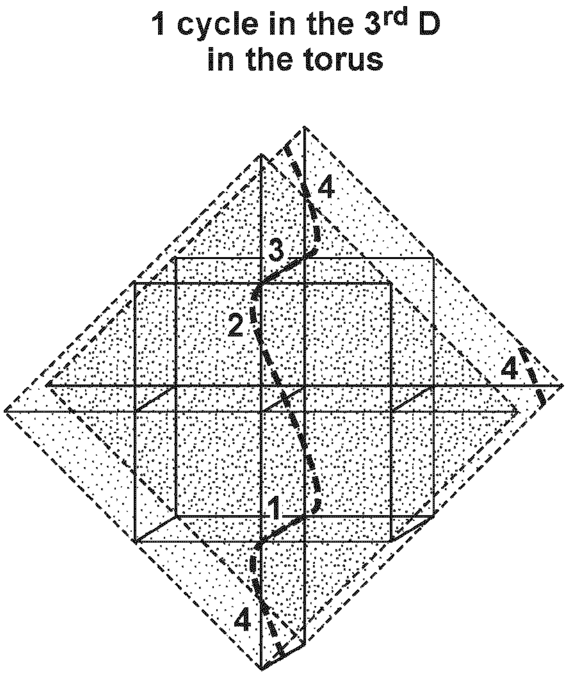


FIG. 8B

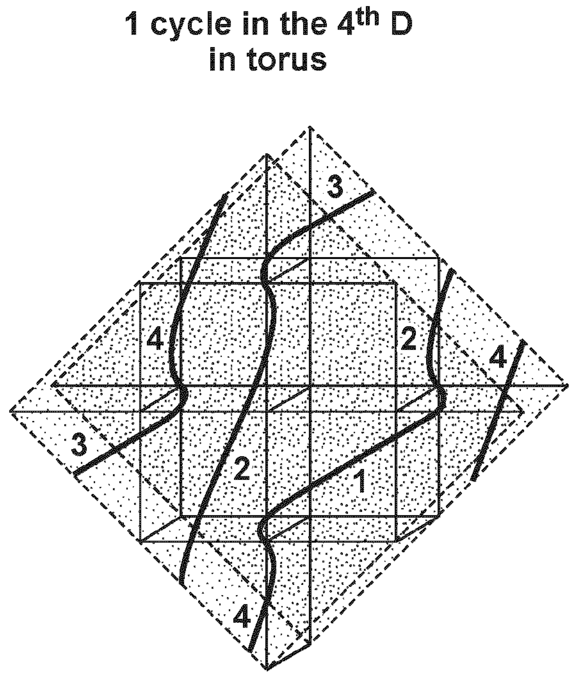


FIG. 8C

FIG. 9

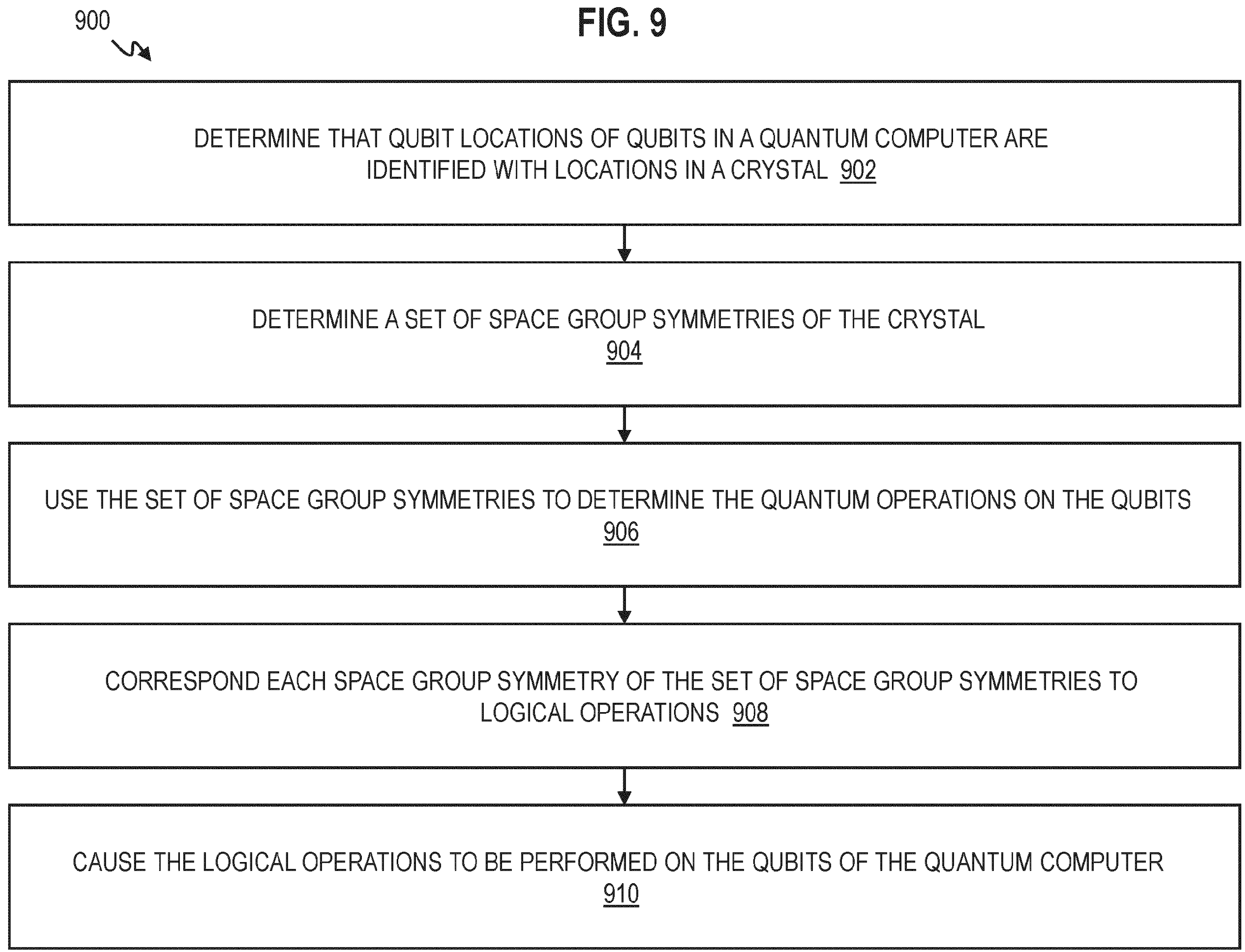
900
DETERMINE THAT QUBIT LOCATIONS OF QUBITS IN A QUANTUM COMPUTER ARE IDENTIFIED WITH LOCATIONS IN A CRYSTAL 902
DETERMINE A SET OF SPACE GROUP SYMMETRIES OF THE CRYSTAL 904
USE THE SET OF SPACE GROUP SYMMETRIES TO DETERMINE THE QUANTUM OPERATIONS ON THE QUBITS 906
CORRESPOND EACH SPACE GROUP SYMMETRY OF THE SET OF SPACE GROUP SYMMETRIES TO LOGICAL OPERATIONS 908
CAUSE THE LOGICAL OPERATIONS TO BE PERFORMED ON THE QUBITS OF THE QUANTUM COMPUTER 910

FIG. 10

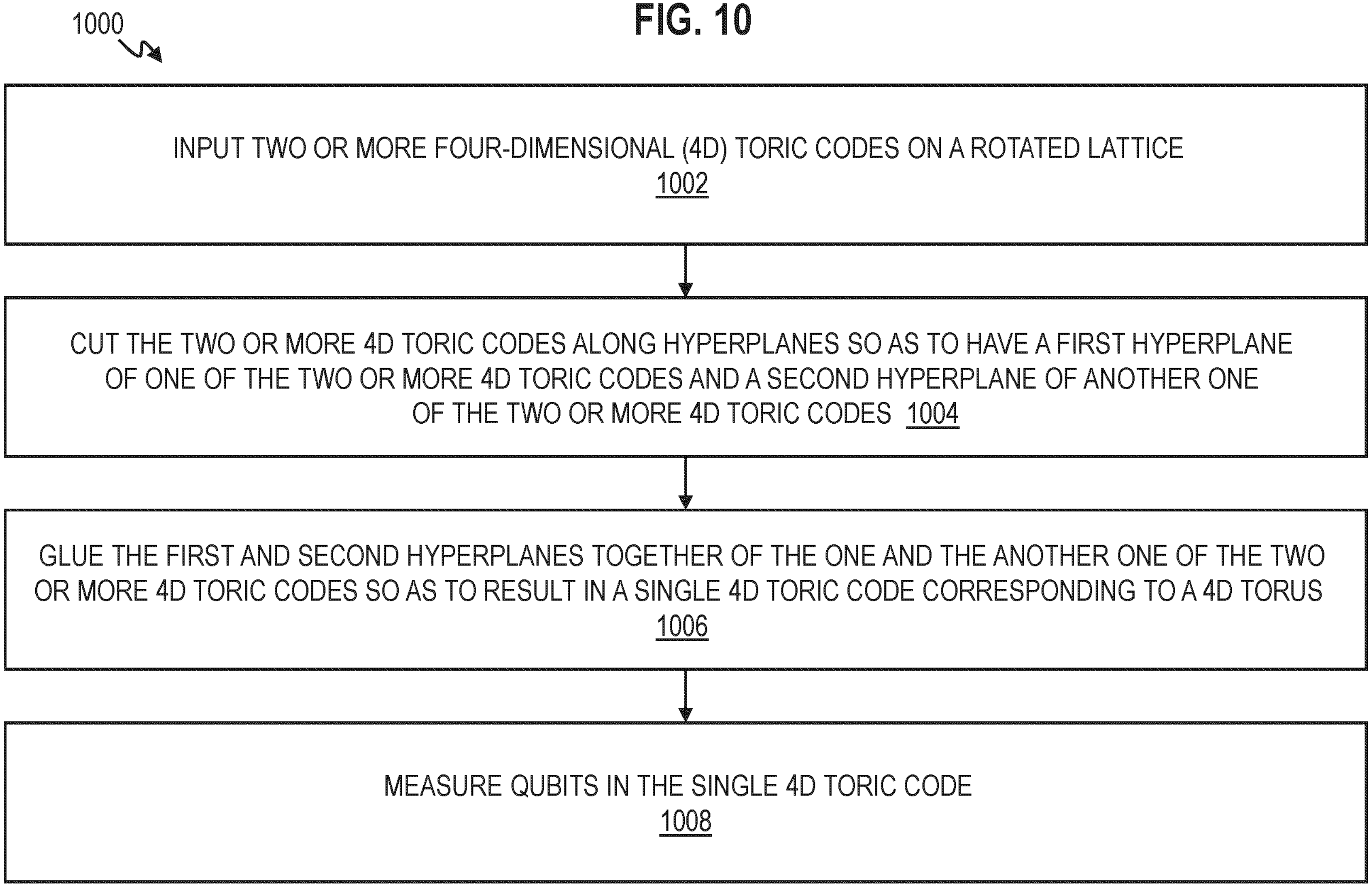
1000
INPUT TWO OR MORE FOUR-DIMENSIONAL (4D) TORIC CODES ON A ROTATED LATTICE 1002
CUT THE TWO OR MORE 4D TORIC CODES ALONG HYPERPLANES SO AS TO HAVE A FIRST HYPERPLANE OF ONE OF THE TWO OR MORE 4D TORIC CODES AND A SECOND HYPERPLANE OF ANOTHER ONE OF THE TWO OR MORE 4D TORIC CODES 1004
GLUE THE FIRST AND SECOND HYPERPLANES TOGETHER OF THE ONE AND THE ANOTHER ONE OF THE TWO OR MORE 4D TORIC CODES SO AS TO RESULT IN A SINGLE 4D TORIC CODE CORRESPONDING TO A 4D TORUS 1006
MEASURE QUBITS IN THE SINGLE 4D TORIC CODE 1008

Europäisches Patentamt
European Patent Office
Office européen des brevets

# EUROPEAN SEARCH REPORT

Application Number
EP 25 20 1373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br>A | NIKOLAS P BREUCKMANN ET AL: "Fold-Transversal Clifford Gates for Quantum Codes", ARXIV.ORG, CORNELL UNIVERSITY LIBRARY, 201 OLIN LIBRARY CORNELL UNIVERSITY ITHACA, NY 14853, 14 February 2022 (2022-02-14), XP091159486, * Abstract; Section 1; Section 2; Section 3; Section 4; Figure 1; Figure 2 * | 1-4,6-9<br><br><br><br><br><br><br><br>5 | INV.<br>G06N10/20<br>G06N10/70<br>G06N10/40 |
| X | RYOHEI KOBAYASHI ET AL: "Fault-tolerant logical gates via constant depth circuits and emergent symmetries on non-orientable topological stabilizer and Floquet codes", ARXIV.ORG, CORNELL UNIVERSITY LIBRARY, 201 OLIN LIBRARY CORNELL UNIVERSITY ITHACA, NY 14853, 10 October 2023 (2023-10-10), XP091632563, * Abstract; Section I; Section II; Section III-D; Figure 1; Figure 5; Table I * | 1-9 | |
| | | | TECHNICAL FIELDS SEARCHED (IPC) |
| X | MICHAEL VASMER ET AL: "Three-dimensional surface codes: Transversal gates and fault-tolerant architectures", ARXIV.ORG, CORNELL UNIVERSITY LIBRARY, 201 OLIN LIBRARY CORNELL UNIVERSITY ITHACA, NY 14853, 12 January 2018 (2018-01-12), XP081556915, DOI: 10.1103/PHYSREVA.100.012312 * Abstract; Section I, Section II, Section III, Section VI (3D-3D lattice surgery); figures 1, 18 * | 10-15 | G06N |

-/--

The present search report has been drawn up for all claims

2

| Place of search | Date of completion of the search | Examiner |
|---|---|---|
| The Hague | 11 February 2026 | Popa, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 20 1373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KASPER DUIVENVOORDEN ET AL: "Renormalization group decoder for a four-dimensional toric code", ARXIV.ORG, CORNELL UNIVERSITY LIBRARY, 201 OLIN LIBRARY CORNELL UNIVERSITY ITHACA, NY 14853, 30 August 2017 (2017-08-30), XP080955240, * Abstract; Title; Appendix D * ----- | 10-15 | |
| | | | TECHNICAL FIELDS SEARCHED (IPC) |

The present search report has been drawn up for all claims

2

| Place of search | Date of completion of the search | Examiner |
|---|---|---|
| The Hague | 11 February 2026 | Popa, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

Europäisches Patentamt
European Patent Office
Office européen des brevets

Application Number
EP 25 20 1373

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 25 20 1373

The Search Division considers that the present European patent application does not comply with the requirements of unity of invention and relates to several inventions or groups of inventions, namely:

1. claims: 1-9

Group I (independent method claim 1 and claims 2-9 dependent on claim 1) relates to performing permutations (space group symmetries) to qubits in a crystal in order to implement single logical qubit Clifford operations.

---

2. claims: 10-15

Group II (independent method claim 10 and claims 11-15 dependent on claim 10) relates to cutting, measuring and joining toric codes in order to create inter block entanglement to implement two-qubit logical operations.

---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **N. P. BREUCKMANN** ; **S. BURTON**. *Fold-Transversal Clifford Gates For Quantum Codes*, 2022